Europäisches Patentamt

European Patent Office

Office européen des brevets

(11) Publication number: **0 079 195**
**B1**

## (12) EUROPEAN PATENT SPECIFICATION

(45) Date of publication of patent specification: **19.07.89**

(21) Application number: **82305841.7**

(22) Date of filing: **03.11.82**

(51) Int. Cl.⁴: **H 04 N 5/228**

(54) **System for stabilizing television picture.**

(30) Priority: **10.11.81 US 319845**
**01.02.82 US 344342**

(43) Date of publication of application:
**18.05.83 Bulletin 83/20**

(45) Publication of the grant of the patent:
**19.07.89 Bulletin 89/29**

(84) Designated Contracting States:
**DE FR GB NL**

(56) References cited:
**GB-A-1 580 437**

(73) Proprietor: **CBS INC**
**51, West 52nd Street**
**New York New York 10019 (US)**

(72) Inventor: **Green, Richard R.**
**202 Hogan Road**
**Hamden, CT 06514 (US)**
Inventor: **Siau, John E.**
**Route 91**
**Pompey New York 13138 (US)**
Inventor: **Mahler, Henry W.**
**R.D. No 1 Key Rock Road**
**Newtown, CT 06470 (US)**

(74) Representative: **Rackham, Stephen Neil et al**
**GILL JENNINGS & EVERY 53-64 Chancery Lane**
**London WC2A 1HN (GB)**

EP 0 079 195 B1

Courier Press, Leamington Spa, England.

## Description

This invention generally relates to video signal processing apparatus, and more particularly to a signal processing system for stabilizing a television picture reproduced from video produced by a camera subjected to motion.

In the electronic news gathering (ENG) application of television, in which a portable camera and recorder are taken into the field, often the cameraman is subjected to pushing and jostling with the consequence that the picture reproduced from the recorded video output of the camera exhibits an annoying jumpiness which seriously detracts from the viewability of the picture. That is, even objects in the recorded scene normally expected to remain stationary, such as buildings, trees, and the like, move up and down in a jittery fashion as a result of sudden motion of the camera. The effect is particularly annoying when program segments shot with a remote minicam subjected to jostling are interspersed with truly stationary segments shot with a stable camera. The viewability of the reproduced picture can be similarly impaired when a camera equipped with a telephoto lens, even if stably held, is used to record a distant scene, such as a person standing on a platform delivering a speech, since even very slight movement of the outer end of the lens, usually up and down, is magnified and causes the image of the speaker to move up and down in the reproduced picture. Undesirable jitter in the television picture can also occur when the video signal is produced by a camera carried on moving platform, such as a helicopter, particularly when a telephoto lens is used because, again, vibration of the lens is magnified and causes a "jumpy" picture.

Devices are commercially available for stabilizing the image of a video signal produced by a camera carried on an unstable, usually moving platform, which have been used with success in the shooting of television pictures on aircraft, both fixed wing and helicopters. One such device, which operates on opto-mechanical principles, is the image stabilizer distributed by the Arriflex Corporation, Blauvelt, New York, which includes a support plate on which the camera is mounted and a stabilizer positioned in front of the camera lens. Entering light rays are reflected off a front-surface mirror mounted on two gimbals powered by a battery-driven gyroscope, and the image from this mirror is reflected onto another fixed mirror and into the camera lens. The directional stability of the gyroscope resists off-axis movement — such as pannign of the camera — and a precession brake causes the gryo to lean steadily with the panning motion, thereby to stabilize the image. This type of stabilizer is a real-time device in the sense that it can be used only during actual shooting of the picture. It is not readily adaptable for use with portable television cameras, and even if it could be so adapted the added weight would be inconsistent with the emphasis, particularly for ENG applications, toward smaller and lighter weight cameras. It not being conveniently possible to effect image stabilization during shooting of a scene with a portable camera, if there is to be correction for the jumpiness of the reproduced image caused by jostling or other motion of the camera, it must be later applied to the recorded camera signal, before editing and/or reproduction for broadcasting or viewing.

GB-A-1580437 describes a system for producing a correction signal representative of unsteadiness in a camera-produced input video signal comprising means receiving a camera-produced input video signal exhibiting unsteadiness, correlation means comparing successive picture images of the input video signal to identify a corresponding picture element, and means for measuring the motion of the corresponding picture element between sucessive images and producing a correction signal representative of such measured motion. The correlation means compares a fixed region of successive picture images and is intended to be used in an infra-red viewing system fixed to an aircraft. The correction signal so produced is used to reduce the effect of the unsteadiness on the picture produced by the system.

The described jumpiness in the television picture due to erratic camera motion is different from and is not to be confused with the picture jitter sometimes caused by time base errors introduced during reproduction of video signals recorded on magnetic tape, for example, by reason of expansion or contraction of the tape during or after recording, variations between the tape recording speed and the tape reproducing speed, and the like. The source and consequence of such time base errors will be appreciated from a brief description of the NTSC television system which uses an interlaced scanning system consisting of repeating frames having a first, or odd, field which reproduces alternate lines of each frame and a second, or even field interlaced with the first field which reproduces the remaining lines of each frame. The odd field consists of parallel lines, the first of which begins at the upper left corner of the television screen and the last of which ends in the middle of the bottom of the screen. The even field consists of parallel lines interlaced between the lines of the odd field, the first of which begins in the middle of the top of the television screen and the last of which ends at the lower right corner of the television screen. The video at a point in a line from an even field, for example, contains video data which reproduces a part of the picture occurring just above or just below a corresponding point on the next adjacent line from the odd field. The vertical distance between such corresponding points is one-half pitch, or one-half the center-to-center distance between adjacent field lines. During the scanning process for each frame, it is important that each succeeding line start and stop at the same horizontal position as the line preceding it so that the vertical edges of the generally rectangular picture are straight and so that the reproduced picture is a true image of the scene being televised. To synchronize the scan of the cathode ray tube with the transmitted video signal a horizontal synchronizing pulse is provided at the beginning of each line, and a vertical synchronizing pulse is provided at the beginning of each field.

Apparatus has long been known for removing time base errors from video signals. Early forms of time base error correctors, suitable for use with video tape recorders having four rotary heads and typically having time base errors of one microsecond or less, employed tapped delay lines, or other forms of delay elements, for variably delaying the incoming video signals in order to compensate for time base errors. Time base correctors in current use typically employ digital techniques to accommodate and correct time base errors of several television lines, as are frequently encountered in currently used popularly priced helical scan video tape recorders. Whatever the type of implementation, all time base correctors operate on the general principle of examining the horizontal sync pulse of the reproduced video signal and comparing it with a stable local reference and then advancing or retarding the reproduced signal so that its horizontal sync pulses are always in synchronism with the local reference. Thus, in a time base corrected video signal, any object within the scene represented by the signal bears a fixed time relationship to the horizontal sync pulse of the television line or lines in which the object appears.

In a video signal produced by a television camera subjected to erratic motion during shooting of the picture the situation is quite different; in this case even though the horizontal sync pulses generated at the beginning of each line are absolutely stable, objects in the scene that are expected to be stationary move around in jumpy fashion, producing an effect just as annoying, or perhaps more so, as picture motion caused by sync instability. In other words, here the horizontal sync is perfectly stable, and the jumpy motion in the reproduced picture is caused solely by camera motion.

It is an object of the present invention to provide a signal processing system such as that described above which is capable of detecting and measuring picture unsteadiness in recorded or live video without being affected by intentional panning and tilting of the camera.

According to this invention a post production signal processing system comprises means to enable an operator subjectively to select from within the field of view of the camera as recorded in the input video signal a reference edge which, but for the unsteadiness, is stationary, and the reference edge defines the picture element which is used by the means for measuring the motion of the picture.

Preferably the video signal from an unsteadily held camera is passed through a variable delay device having a controllable delay time which enables introduction of an off-setting delay equipment in time but in a direction opposite to the motion that would otherwise be observed in the television picture as a consequence of camera motion. Since in the scanning system described above (as well as in other interlaced scanning systems) a time delay is directly related to picture position, the amount of unwanted picture motion is determined and the variable delay device is controlled to introduce an equivalent delay to offset the motion; in order to correct for motion that has, in effect, already taken place, the uncorrected signal is delayed to permit correction to be made to the field in which the unwanted motion was first noted and measured.

More specifically, as used in the NTSC system of television, correction is made at the field rate and is achieved by first deriving from the uncorrected video signal horizontal and vertical reference signals representative of normally stationary vertically and horizontally disposed edges, respectively, in the scene represented by the video signal; for example, the upper edge of the frame of a dark door in a light coloured wall would provide an effective vertical reference signal and one side edge of the door might serve as a horizontal reference.

In one system for carrying out the invention, a corrected video signal essentially free of unsteadiness is derived by means for selecting from an input video signal a reference within the camera field of view, which reference but for camera unsteadiness would normally be stationary, against which to measure picture motion, means for measuring the motion of the selected reference and for producing a correction signal representative of such measured motion, and means operative responsively to the measured motion, for making the necessary corrections to the overall television picture represented by said input video signal to eliminate picture unsteadiness.

In a particular form of the system, the reference selecting means comprises means for separately selecting from said input video signal at least one of a horizontally disposed reference edge and a vertically disposed reference edge within the camera field of view against which to measure up and down and side-to-side motion, respectively, the measuring means comprises means for separately measuring motion of the selected one or ones of said horizontally and vertically disposed reference edges for producing vertical and horizontal correction signals, respectively, and said correction making means is operative responsively to one or ones of said correction signals.

Another system for carrying out the invention additionally comprises: means including first and second generators for respectively producing first and second tracking windows for respectively tracking the horizontally and vertically disposed reference edges for separately measuring motion of said horizontally and vertically disposed reference edges and producing vertical and horizontal correction signals, respectively; first memory means operatively associated with said first generator for storing information representing an initial position of said first tracking window horizontally along said horizontally disposed reference edge and responsively to said horizontal correction signals altering the horizontal position of said first tracking window to follow side-to-side motion of said horizontally disposed reference edge; and second memory means operatively associated with said second generator for storing information representing an initial position of said second tracking window vertically along said vertically disposed reference edge and responsively to said vertical correction signals altering the vertical position of said second tracking window to follow up and down motion of said vertically disposed reference edge.

The above, and other objects, features and advantages of the invention will become apparent, and its construction and operation better understood, from the following description read in conjunction with the accompanying drawings.

Figure 1 is a block diagram of the vertical stabilizer portion of a video processing system according to one embodiment of the present invention;

Figure 2 is a block diagram of a position predictor adaptable for use in either the vertical or horizontal stabilizer;

Figure 3 is an illustration of a display on a television monitor useful in describing the operation of the system of Figure 1;

Figure 4 is an illustration of a fragment of a television raster display useful in describing the operation of the system;

Figure 5 is a block diagram of the horizontal stabilizer portion of a video processing system according to the Figure 1 embodiment of the invention;

Figure 6 is an illustration of a fragment of a display on a television monitor useful in describing the operation of the system of Figure 5;

Figure 7 is a diagram showing lines from selected fields, also useful to an understanding of the operation of the system of Figure 5;

Figure 8 is a block diagram of a modified form of the vertical stabilizer portion of the video processing system; and

Figure 9 is a block diagram of a modified form of the horizontal stabilizer portion of the video processing system.

Although the picture stabilizing system of the invention is useful in any of the currently used television systems, the invention will be described as applied to the NTSC color television system. Further, although the system may be implemented in either the analog or the digital domain, the digital implementation is preferred because of its superior accuracy and ease of construction and will be described.

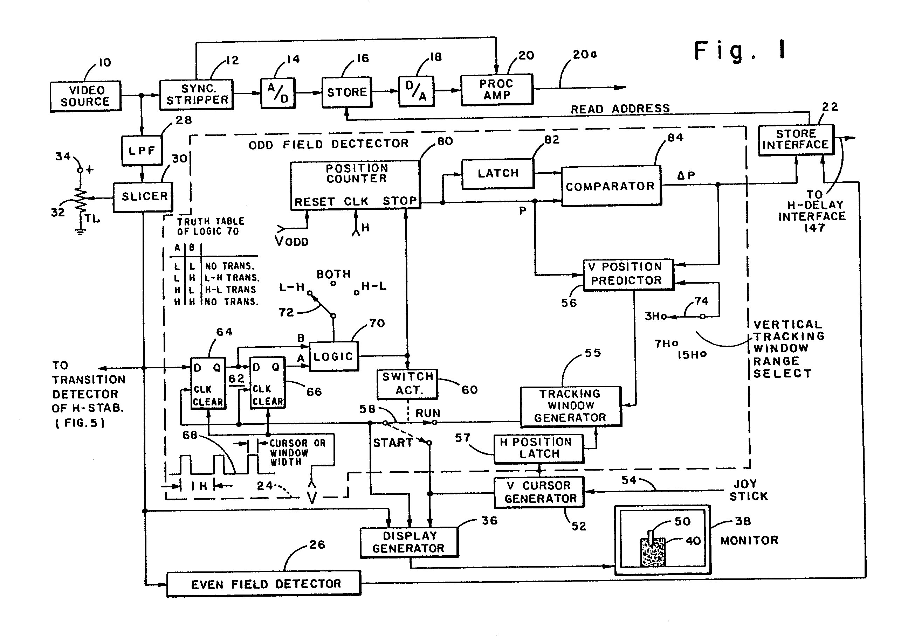

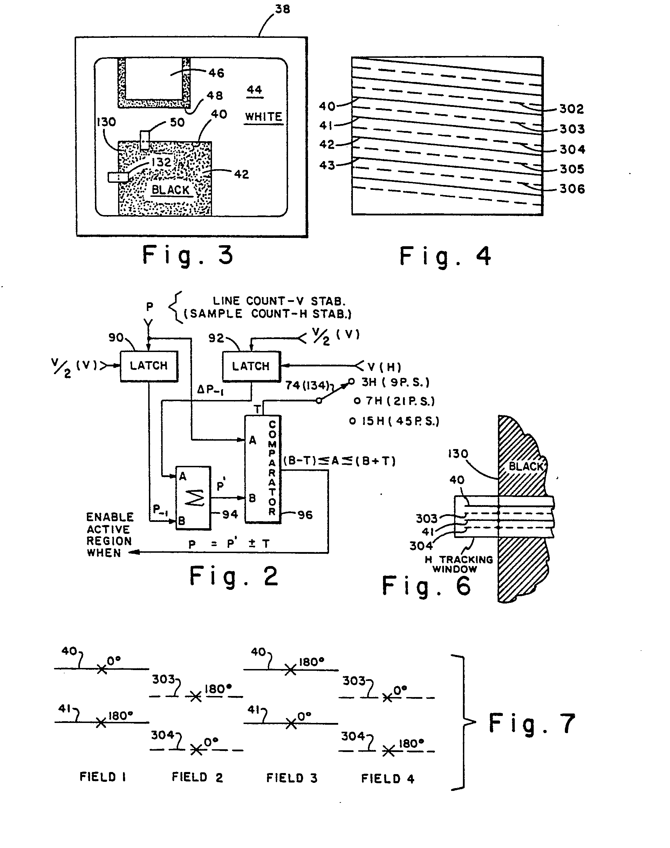

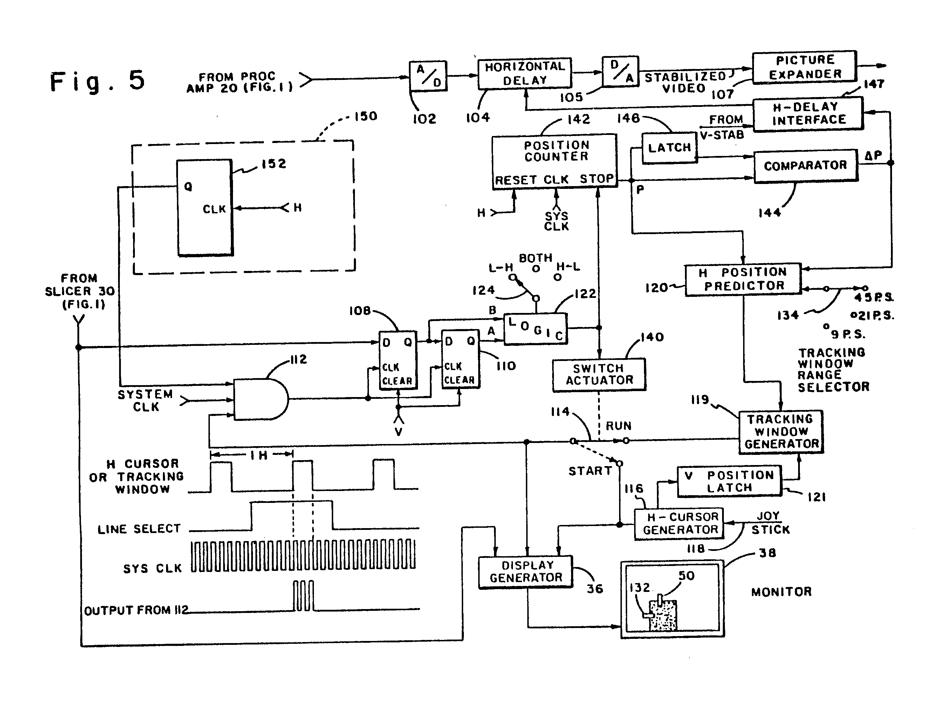

Referring first to the vertical picture stabilizer illustrated in Figure 1, a video input signal from a video source 10 which, for example, may be a video tape recorder for reproducing a video signal produced by an unsteadily held portable television camera, is applied to a sync stripper 12 which removes the sync pulses and the resulting non-composite video signal is encoded by a pulse code modulation (PCM) technique, utilizing an 8-bit code, in an analog to digital converter 14 and then applied to and propagated through a digital storage or delay means 16. The delay circuit may take the form of the now well-known digital frame store and for reasons which will become apparent, preferably has a storage capacity of 525 television lines, or one NTSC frame. The digital non-composite video emerging from the frame store, normally delayed by up to 525H, is converted to analog form by a digital to analog converter 18 and applied to a conventional processing amplifier 20 which re-inserts the sync and produces a composite video signal at its output terminal 20a. The A/D and D/A converters may be incorporated in digital frame store 16, and normally are in currently available frame stores. It is possible to control currently available frame stores so as to delay an applied video signal by an arbitrary amount from zero up to 525H in units of system clock intervals, typically, about 70 nanoseconds. The delay time is altered by advancing or retarding the read address of the store under control of a suitable frame store interface 22, and the amount by which the uncorrected video signal must be delayed to stabilize an unsteady picture caused by camera instabilities is detected and measured by the signal processing system now to be described.

The principles on which operation of the system is based will be best understood by initially confining the description to vertical picture stabilization (i.e., removal of up and down motion in the television picture) which, as has been noted, is accomplished by delaying or advancing the uncorrected video by an integral number of horizontal lines. To detect the presence and magnitude of vertical motion in a televised scene it is necessary to observe the location of a reference horizontal edge and compare it with its location one frame (1/30 sec.) earlier; i.e., in the next previous corresponding odd or even field. Direct comparison with the previous field cannot be made because of the interlaced nature of the NTSC (PAL and SECAM, also) system; either the odd fields, or the even fields, or both may be utilized. The invention will be described in the context of using odd fields for comparison, with the understanding that the system would have the same operation if the even fields were utilized. An alternative approach utilizing both the odd and the even fields will also be discussed.

Essential to the operation of the control system is the derivation from the incoming video signal of a reference signal representative of a normally stationary horizontal edge in the television picture, the vertical position of which will change with up and down motion of the picture and thus provide a reference for measuring the amount of correction needed to maintain the horizontal edge, and hence the picture itself, at substantially the same vertical position. The reference signal is conveniently derived from only the luminance component of the input video signal and to this end the chrominance component of the video signal is removed by a low pass filter 28, and the luminance component then applied to a video slicer 30, which is also supplied with an adjustable threshold slice level TL by a potentiometer 32 connected between a source of positive potential, represented by terminal 34, and ground. The slicer circuit, which may take any of many forms known to the art, delivers a binary output which is high when the video signal exceeds the threshold level. The threshold level is selected so that an abrupt change in the video, say from black to white, or from white to black, as might be encountered at an edge exhibiting a contrast with the background, is highly intensified by producing a 2-level signal at the output: if the amplitude of the video happens to be below the threshold level the output voltage will have one level, and if the video exceeds the threshold the output signal will have the other voltage level. When the sliced video, after reinsertion by a suitable display generator 36 of the sync and burst removed by the slicer, is displayed on a picture monitor 38, the result is a black and white signal display with no grey; all luminance below a certain threshold level is black, and all luminance above the threshold is white, or vice versa, depending on the polarity of the slicer output signals and whether or not they are inverted before being applied to the monitor.

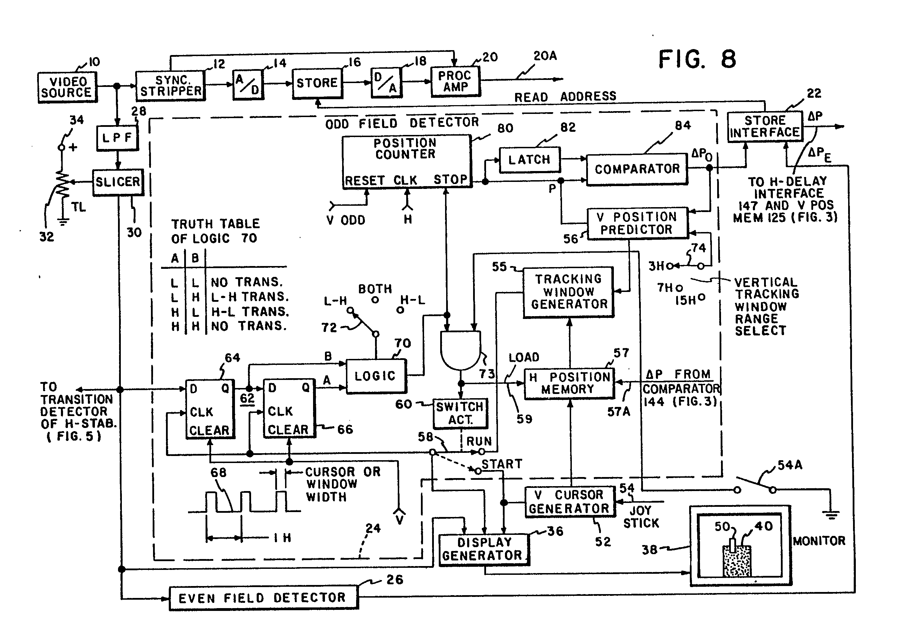

Although the entire video signal is sliced, operation of the system depends only on such object or objects in the scene which will serve as a suitable reference, which for vertical stabilization would be a horizontal line or edge of an object that would normally be stationary. In the example illustrated in FIG. 3, the top edge 40 of a dark door 42 against a bright wall 44 would provide an excellent reference for measurement of up and down motion of the picture in which it is contained. The example chosen for illustration also includes a window 46 the frame of which appears black in the display and presents both horizontal and vertical edges; the lower edge 48 of the window frame could therefore be used as an alternate reference edge for measurement of up and down picture motion. As will be seen later, the operator may select either of edges 40 or 48 as the horizontal reference, the system thereafter having the ability to lock onto the selected reference and not be frustrated or confused by the other proximate horizontal edge.

The horizontal edge in the scene chosen as the reference for measuring up and down motion of the picture is electronically selected by a cursor 50 which is generated by a vertical cursor generator 52 and under control of display generator 36 is displayed on the monitor as a rectangle having greater illumination intensity, or a different color, than that of the displayed sliced video. The left hand vertical edge of cursor 50 defines a vertical line along which the detector looks for a horizontal edge, its horizontal width being unimportant other than that some finite width is required to enable the operator to see it. In the preferred embodiment, cursor 50 and another cursor for selecting a vertical edge for horizontal stabilization (to be described), are displayed in color and, therefore, must be at least several cycles of the color subcarrier in width.

The position of the cursor 50 on the display is electronically manipulated up and down and from left to right by a joy stick control of conventional design, schematically shown at 54, which produces a pair of D.C. signals, one for each of the horizontal and vertical axes, which together establish a precise coordinate position on the screen; thus, by properly manipulating joy stick 54, which is operatively associated with cursor generator 52 and display generator 36, it is possible to position the cursor at any desired location on the display. In the illustrated example, it will be assumed that the cursor has been positioned by joy stick manipulation to straddle the horizontal edge 40 so as to "look at" the point of intersection of the left hand edge of cursor 50 with the horizontal edge 40 and thus specify such point on edge 40 as the picture-contained reference for measurement of up and down picture motion.

Omitting for the present a description of the function and implementation of the illustrated position predictor 56, when a switch 58 (schematically shown as a mechanical switch but actually an electronic switch) is moved to its "START" position by a switch actuator 60 (to be described), cursor 50 is applied as one input to a transition detector 62 consisting essentially of two positive-edge-triggered "D" flip-flops 64 and 66 cascade connected as shown. As is known, a characteristic of the "D"-type flip-flop is that there is a finite delay, following application of a clock pulse, before-information present at its D input is passed to its Q output; this feature is used to advantage in the transition detector. The output of video slicer 30, which is high whenever the video exceeds the threshold level TL, is applied to the D input of the flip-flop 64, and its Q output is applied to the D input of flip-flop 66. Vertical sync pulses derived, for example, from sync stripper 12, are applied simultaneously to the "CLEAR" input of each of the flip-flops for resisting transition detector 62 at the beginning of each field of incoming video.

The V-cursor is represented by a digital waveform 68 which is high whenever a portion of the video which is covered by the cursor is being scanned. This waveform is a sequence of pulses which occurs once every field and adjacent pulses of which are separated by exactly 1H; the width of each of these pulses is equal in time to the width of the cursor 50. The number of pulses in the sequence is determined by the size of the cursor in the vertical direction; i.e., if the cursor is twenty lines high the pulse sequence 68 will be twenty pulses long. This waveform is applied to display generator and displayed as a vertically disposed rectangle on monitor 38, and is also applied to the clock input of each of flip-flops 64 and 66, each of which is operative to pass, after some delay, information present at its "D" input to its Q output whenever a positive-going edge occurs at its clock input, and the Q output will remain at that level (either high or low) until the next positive edge occurs at the clock input. Thus, if the first pulse in the sequence occurs at time T, then just after time T the Q output of flip-flop 64 will equal the output of slicer 30 at time T and will be unchanged until just following time=T+1H, at which time flip-flop 66 looks at its "D" input; therefore, just after time=T+1H the Q output of flip-flop 66 is equal to the output of slicer 30 at time=T. In the meantime, at time=T+1H flip-flop 64 will have passed its "D" input to its Q output just after time=T+1H. The inherent delay of the flip-flops permits comparison of output A from flip-flop 66 with the output B from flip-flop 64 in a suitable logic circuirt 70 to provide an indication of whether or not a vertical transition (i.e., from black to white, or white to black) has occurred. As seen from the truth table of logic 70, when output A of flip-flop 66 is equal to output B of flip-flop 64 (i.e., both are low, or both are high) no transition has occurred. On the other hand, it is known that a transition has occurred when outputs A and B are unequal, and the logic also determines whether the transition was from low-to-high or from high-to-low, and by means of a switch 72 the operator can select either the L-H transition or the H-L transition or both, for sensing and measuring the position of the reference transition; e.g., the edge 40 of the door 42 (FIG.3). Once a reference transition is found in this manner, the output of logic 70 is high and automatically activates the switch actuator 60 which in turn, throws switch 58 from its "START" to "RUN" position; when the switch is in the latter position, transition detector 62 looks for a reference transition within a region defined by a vertical tracking window produced by a tracking window generator 55 and position predictor 56, the operation of which will be described presently. Suffice it to say for now that the waveform of the vertical tracking window is identical to waveform 68 of the vertical cursor except that it has fewer pulses per field; typically, it consists of either three, seven or fifteen pulses per field, selectable by the operator by actuation of a switch 74, corresponding to a vertical tracking window height of three, seven or fifteen television lines. The significance of this selectability, and the function of the position predictor and the tracking window, will be evident from a later description thereof following discussion of how the vertical position of the reference transition in the television picture is measured.

The output signal from logic 70 is also applied to the "STOP" terminal of a position counter 80, the function of which is to determine the vertical position of the selected reference edge. Since the position of any point in the picture is a function of time, the vertical position of the selected horizontal reference is determined by counting down from the first scan line in a field (in this case, an odd field) until the line containing the reference transition is reached. To this end, the counter is reset by odd frame sync pulses derived from the incoming video signal, for example by sync stripper 12, and applied to the "RESET" terminal of counter 80, and horizontal sync pulses H, also derived from the incoming video, are applied to the "CLOCK" input of the counter. The counter counts scan lines of the field until stopped by a signal from logic 70, signifying that the vertical position of the horizontal reference has been reached, whereupon the count stops and the counter produces at an output terminal a digital number representative of the scan line containing the reference edge.

This number, which for purposes of illustrative example will be assumed to be 125 (indicating that the reference edge is in the 125th line down from the top of the odd field), is supplied to and stored for a period of one television frame in a suitable latch circuit 82 so as to be available for comparison with the number of the line which contains the reference edge in the next-occurring odd field. The number stored in latch circuit 82 is outputted at the frame rate and applied as one input to a comparator 84, the second input of which is the output of counter 80; thus, comparator 84 compares the position of the reference edge in the current odd field (that is, the number directly applied to the comparator from counter 80) with its position in the next previous odd field, as represented by the number stored in the latch circuit. Supposing, now, that in the next previous odd field the reference edge was at line 124, the one-line difference indicates that the reference has moved downward, meaning that the camera had tilted upward, by one scan line during the frame interval. Unless the difference is corrected, the reproduced picture will move downward by one horizontal line; to prevent such motion the output of comparator 84 ($\triangle P=+1$) is applied to suitable interface circuitry 22, the functon of which is to control the delay of frame store 16 by advancing or retarding the read address of the frame store. In the present example, then, the interface circuitry 22 would advance the read address of the frame store by one horizontal line so as to cause the reference edge to appear in the same scan line of the current field as it occupied in the immediately preceding odd field. Continuing with this example, and assuming that the reference horizontal edge appears at line 126 of the next succeeding odd field, indicating that in a period of a 30th of a second the reference edge has moved downward by another horizontal line, comparator 84 will again call for advancing the read address of frame store 16 by one horizontal line. In the event of continued camera motion in the same direction, the system continues to advance the read address of the frame store to "keep up" with the motion until such time as there is no change in the position of the reference edge in two successive odd fields; that is, there is no output from comparator 84, or the maximum limit of the correction range has been reached with the consequence that no further change is made to the read address of the frame store. If the

count should reverse, indicating that the reference edge is moving upward instead of downward, the frame store interface 22 would retard the read address of the frame store to move the entire picture down to where it was in the immediately preceding odd field.

How and when horizontal lines are added or subtracted to effect vertical stabilization will now be described in greater detail. Let it again be assumed that the odd field detector has measured a 1H change in position in a direction requiring that the video in the frame store be advanced by the same amount. It will be appreciated, however, that if the correction were to be made as soon as the need for it is detected, the change would be annoyingly visible in the picture. To avoid this, the correction is applied during the vertical blanking period (when there is no picture) at which time the measured change in position of the reference edge is applied to the video in the frame store by changing the delay introduced by the frame store.

Although a full frame of storage preferably is provided for achieving half-line correction (to be described), one field of storage capacity in store 16 is sufficient to enable correction to be made in each odd field, in the very field where the error occurred, because it is capable of retarding all of the video for a time sufficient to determine the amount of correction required and, in effect, to apply it retroactively. Thus, if there is a shift of 1H in a given odd field, for example, by delaying the video by one field it is possible to insert the correction during the entire time that the odd field is present at the output of store 16; i.e., the entire field gets the 1H change in delay, and the correction is made synchronously by fields.

By varying the delay through store 16 by integral multiples of H to achieve vertical correction, it will be seen from consideration of the interlaced scan of Figure 4 that a 1H delay in the store causes the picture to move 1H or two frame lines; a full frame of storage makes 1/2H or frame-line correction possible. Figure 4 shows several lines of a 525-line interlaced video picture as they would appear on a picture monitor; the lines from one field (e.g., odd) are shown in solid line and the lines from the other field (e.g., even) are shown by dashed lines. The addition of 1H delay will move line 40 of the odd field to the position of line 41, line 41 to that of line 42, and so on, and in the even field, line 303 will be moved to the position of line 304, line 304 to that of line 305, and so on; from this it is seen that a correction of 1/2H could be made by adding a delay of 263H or subtracting a delay of 262H. That is, in either case line 40 would move to the position of line 303, line 41 to that of line 304, line 42 to that of line 305, line 303 to that of line 41, line 304 to that of line 42, line 305 to that of line 43, etc. Similarly, one-half of the effect of subtracting a 1H delay in frame store 14 can be achieved by adding to it a delay of 262H or subtracting from it a delay of 263H. Making corrections in smaller steps in this manner (i.e., in one frame line instead of one field line) greatly improves the quality of the stabilized picture. This is particularly important with slowly moving vertical motion, since the time occupied by a vertical shift of 1H may be several frames, or even seconds, but the necessary 1H correction must be implemented in one quantum jump if only a single field of storage is used; this creates disturbing jumps in the picture. With a frame of storage available, frame line correction, as just explained, is implemented as follows.

With no correction being applied, the output is delayed by one frame in store 16. Upon detection of a $\triangle P$ of one line in the current odd field as compared to the immediately preceding odd field, frame store interface 22 alters the reading of store 16 during the following vertical blanking interval to advance the read address either 262 lines, if the detected change was upward, or 263 lines if the change was downward. In this way, the field which indicated the error is effectively shifted by 1/2H, or one frame line, in the desired direction. If no further $\triangle P$'s are detected for several frames, the additional 1/2H of correction is implemented after a period of time such that the final 1H of correction is not disturbing to the viewer. While experience has shown seven frames to be a preferred interval, provision is made for a range of 3 to 15 frames. Assuming a 7-frames delay, seven frames after the advance in the read address of store 16 by 262 or 263 lines, the read address would be retarded by either 263 or 262 lines, respectively, to complete the necessary full 1H correction. If before the chosen delay is reached, additional $\triangle P$'s are detected, correction is implemented in full in the next vertical blanking interval, with the final 1/2H correction accomplished when no further errors are detected within the delay time, and the delay in store 16 is restored to approximately one frame.

The description thus far has assumed the use of only one vertical motion detector which compares either successive odd fields or successive even fields, but not both, to detect vertical motion, and the point has been made that the interlaced scan of commercial television systems precludes comparison between immediate successive fields. It is recognized, however, that certain industrial and military television standards which do not employ interlace would be amenable to successive field comparisons. Provision of a second detector for sensing vertical shifts in the fields not compared by the first detector which, in the description thus far has been considered an odd field detector, would significantly improve the operation of the system. More particularly, the use of a second, even field detector 26 enables more precise corrections to be performed upon slowly changing vertical motion by detecting motion that might occur during the half-frame interval between successive odd fields. This doesn't mean that the odd field hasn't also moved; it merely means that it has not moved sufficiently for the detector to measure a 1H change in position. The sliced video from slicer 30 is applied to even field detector 26, and if the transition detector 62 is incorporated in the slicer it could serve both the odd and even field detectors, and logic circuit 70 and switch actuator 60 likewise could be shared by the two detectors. However, the even field detector must have its own latch and comparator in order separately to detect and measure motion of the horizontal reference edge by repetitive comparison of the current even field with the even field immediately preceding it. Reverting to the discussion of frame line correction for slowly changing motion, whichever of the two field detectors first indicates the need for correction initiates the change by advancing the read address of store 16 by 262 or 263 lines; however, rather than implementing the additional frame line of delay after a predetermined delay of say, seven frames, it is implemented when the other field detector senses the additional motion, thus providing more precise correction. If both detectors should indicate a 1H shift of the horizontal reference edge, the correction would be implemented as a full 1H change in store 16. It should be kept in mind that detected motion of 1H in both the odd and even fields represents a movement of only one line per frame and is corrected by changing the read address by 1H, not 1H for each detector, which would give two lines per frame.

Keeping in mind that correction for horizontal camera motion will be applied concurrently with application of vertical correction, but still deferring description of how the amount of horizontal correction is measured and applied, it will be evident that as television lines are added or subtracted to effect vertical stabilization, and small increments are added or subtracted to effect horizontal stabilization, the resulting encroachment of the blanking region into the reproduced picture will become visible, which places a practical limit on the range of correction that can be achieved. In order that blanking not be seen in the reproduced picture, means are provided for "cropping" that portion of the blanking region seen in the picture; this can be accomplished by expanding the active picture, subsequent to application of the correction, by means now well-known in the industry as "electronic zoom", to an arbitrary extent, both horizontally and vertically, such that the home viewer will not see the blanking which the correction has introduced into the larger picture. This requirement for "cropping" imposes an upper limit on the extent to which correction can be applied, because the more the correction the more the picture must be cropped, and at some point the picture becomes unacceptable. As a practical matter it has been found that no more than sixteen television lines should be cropped from the height of the picture and, by analogy, no more than a comparable amount from the width of the picture. This means that it is possible to apply ±8 television lines of correction in order to achieve vertical stabilization and yet have an acceptable picture.

The just described correction range, that is, ±8 television lines for vertical stabilization, is not to be confused with the height of the tracking window (also measured by numbers of H) employed to determine the size of the active region selected for following the reference edge for detection and measurement of vertical motion. In a typical situation, the tracking window "looks" at fewer horizontal lines than the system is capable of correcting for; if the vertical tracking window is too high, then other information present within the scene could intrude into the tracking window and frustrate the operation of the system. In the example illustrated in Figure 3, if the tracking window were appreciably higher than the assumed three horizontal lines, the lower horizontal edge 48 of the picture frame might intrude into the tracking window and confuse the system as to which edge it has selected for vertical picture stabilization. As has been noted, the transition detector has intelligence to the extent that it can distinguish between a low-to-high and and high-to-low transition in the sliced video, and switch 72 gives the operator the option of selecting either or both, and seizes upon the first horizontal reference edge it finds. However, as has been noted, joy stick 54 enables the operator to shift the position of the cursor to enable selection of a particular horizontal reference edge. As will be described presently, if the height of the tracking window is limited to a reasonable number of lines it locks onto and follows the selected edge in spite of vertical motion of that edge.

Before proceeding to a detailed description of position predictor 56, it will be useful to review the functions of the cursor and the tracking window, and how the position predictor affects the tracking window; although the horizontal stabilizer (to be described) also employs a cursor, a tracking window and a predictor, because its operation is so closely analogous the present description will be limited to the vertical stabilizer. During startup of vertical stabilization, that is, at any time when a reference edge is being selected by the operator, the position detector is disabled and the system "looks" for a reference at the region defined by the boundaries of the cursor, which begins at its left vertical edge. When transition detector 62 has detected a reference edge, switch 58 is moved to the "RUN" position and the stabilizer thereafter "looks" for the selected reference edge within the region defined by tracking window generator 55. This region, which is termed a "tracking window" because it moves with or vertically tracks the motion of the reference edge and is a "window" through which the stabilizer looks for the reference edge, is defined by the position of the left edge of the cursor stored in an H position latch 57 when it entered the "RUN" mode, and the vertical position along this edge is established by the predictor, which provides a range along this vertical edge over which the reference edge is looked for. Thus, the vertical stabilizer looks for a horizontally oriented reference along a vertical line segment. The principal function of the predictor is automatically to position the tracking window such that the line segment is centered over the expected or predicted position of the reference edge, such centering occurring along the cursor-established left edge of the tracking window. The predictor decides where to center the tracking window by adding the previous position of the reference to its previous change in position; i.e., by looking at where the reference edge was last seen and how much and in which direction it was moving, the predictor determines where it can be expected to be "seen" in the next frame. To provide some margin for error in the event of a change in the velocity of movement of the reference edge from what it was at lastlook, the line segments must have sufficient length to accommodate such velocity changes; however, they should not be longer than necessary for this purpose since the longer they are the greater is the chance that some other horizontal edge in the picture might intrude into the tracking window and be confused with the reference edge. The optimum tradeoff depends largely on the program material being stabilized, which is the reason the switch 74 is provided to permit the operator to select the length, either three, seven or fifteen horizontal lines in the present embodiment. If the unsteadiness of the scene is relatively minor, short tracking windows (e.g., 3H high) may be used if necessary to prevent interference from other edges in the picture.

If the stabilizer fails to find an edge within its tracking window then the stabilizer returns to the startup mode, with switch 58 in the "START" position. On the other hand, when the tracking window has found and locked onto the reference edge, the operation thereafter is automatic.

A preferred form of position predictor 56 shown in Figure 2 has three inputs; (1) a signal indicative of the height of the active region of the tracking window, namely, 3H, 7H or 15H; (2) a signal $\triangle P$ from the output of comparator 84 indicative of the change in position of the selected reference edge between the two previous successive odd (or even) fields; and (3) a signal P from the output of position counter 80. The predictor uses this information to adjust the position of the tracking window, this being the only portion of the picture in which the transition detector is enabled. The predictor being of this same general configuration in both the vertical and horizontal stabilizers, it is illustrated only once, with the modifications required for utilization in the horizontal stabilizer shown in parentheses; for example, for the horizontal stabilizer application the tracking window range selector is calibrated in terms of picture elements instead of television lines (i.e., 9P.S., 21P.S. or 45P.S). The predictor includes a pair of latch circuits 90 and 92 which are connected to respectively store from position counter 80 a digital number P representative of the position (i.e., the line number) in which the horizontal reference edge occurred in the next previous corresponding field, and the change in position, $\triangle P$, of the reference edge from what it was in the corresponding field before the next previous corresponding field to what it is in the next previous corresponding field. These inputs to latch circuits 90 and 92 are each clocked out at frame rate in response to application of frame pulses derived from sync stripper 12 (for example) and respectively applied to the input terminals B and A of a summing circuit 94; that is, the number $P_{-1}$ is added to $\triangle P_{-1}$, which may be thought of as $P_{-1}$-$P_{-2}$, where $P_{-2}$ is the position of the reference edge in the corresponding field before the next previous corresponding field. The sum of $P_{-1}+\triangle P_{-2}=P'$, where $P'$ is the predicted position of the reference edge in the next-to-occur corresponding field. The sum signal $P'$ is applied to the input terminal B of a comparator 96 in which it is compared with the output of position counter 80, which is directly applied to the A input terminal of the comparator. Depending on the position of switch 74, which is selected by the operator, a signal T representing a "tolerance" of 3H, 7H or 15H height, is applied as a third input to comparator 96. The output of the comparator is high when the predicted position $P'$ is equal to the present position, P, plus or minus T, and after initial startup is applied to the tracking window generator 55. The system thus looks for the edge within the small area of the tracking window (discussed above) centered at a vertical position determined by the position predictor. That is, restating the described operation of the position predictor, if

$P'=$ predicted present position of reference edge

$P_{-1}=$ position of edge in next previous corresponding field

$P_{-2}=$ position of edge in corresponding field before next previous corresponding field

$\triangle P_{-1} = P_{-1}$-$P_{-2}$

then the system centers the active region of the tracking window at

$$P'=P_{-1}+\triangle P_{-1}=2P_{-1}P_{-2} \text{ (or } P'=P_{-2}+2\triangle P_{-1})$$

Operation of the predictor is based on the assumption that the camera motion, and thus the motion of the reference horizontal edge, is in the same direction over a period of several frames and that the magnitude or extent of motion changes gradually. Reversals in the direction of up and down motion, or changes in the degree of such motion are accommodated by the height of the tracking window, and as will be seen presently, changes in direction of side-to-side camera motion, and changes in the degree of such motion are accommodated by the size of a similar tracking window embodied in the horizontal stabilizer. An important feature of the system is that after startup the tracking window continues to follow (i.e., locks onto) a selected reference edge even if the joy stick controlled cursor is moved away from the edge, whether by manipulation of the joy stick or significant camera motion.

Turning now to the horizontal stabilization aspect of the system, although the foregoing description of the vertical stabilizer implies that the horizontal stabilizer is similar in implementation and operation, there are major differences, the most significant of which stems from the fact that the vertical stabilizer operates responsively to integral line differences; that is, shifting of the picture is done on the basis of an integral number of horizontal lines, and occasionally in terms of so-called half-lines when the rate of vertical motion is rather slow. Using composite coding of the video, the color subcarrier contained in the video does not pose significant problems in the vertical stabilizer in that shifting of the picture by an integral number of lines causes the color subcarrier to be in a known one of two phases, either the so-called 0° phase or the 180° phase, and a chrominance inverter conventionally built into frame store 16 provides the necessary correction to ensure that the color subcarrier always has the correct phase as it leaves the frame store. In the horizontal stabilizer, however, in which the delay device introduces delays of only a few microseconds duration, the amount of which is varied in terms of system clock periods, the presence of the color subcarrier creates troublesome problems. In practice (and this will be described in greater detail presently) the delay unit is set to establish a nominal delay for the video passing through it and the amount of delay, determined by the control circuit illustrated in FIG. 5 and to be described presently, is adjusted relative to the intermediate delay, in terms of clock units, which in the case of sampling at four times the color subcarrier frequency, is approximately 70 nanoseconds each, to compensate for the measured horizontal shift of the picture caused by camera unsteadiness. The exact nature of the problem and how it is solved will become evident as the description proceeds.

In a successfully operated embodiment of the system, the output from the vertical stabilizer (Figure 1), that is, the analog composite video signal from PROC AMP 20, is digitally encoded in an analog to digital converter 102 and applied to the input of a horizontal delay device 104; thus, the horizontal stabilizer applies horizontal correction to a video signal that has already been vertically stabilized. Although application of horizontal stabilization in this way is not essential to the operation of this system, it has been found to be operationally acceptable and, in general, more easily implemented than other approaches that might be used. However, as in the vertical stabilizer, a signal for controlling the delay of delay device 104 is derived from the input video signal because horizontal stabilization depends on a vertically disposed edge in the scene, the horizontal position of which will change with side-to-side motion of the picture and thus provide a reference for determining the amount of correction needed ro maintain the vertically disposed edge, and hence the total picture, at substantially the same horizontal position.

The reference signal for horizontal stabilization may be and preferably is derived from the sliced video from slicer 30 (Figure 1), which is applied to a transition selector 106 which, as in the vertical stabilizer, consists of a pair of "D"-type flip-flops 108 and 110 connected as shown with the Q output of the former applied to the D input of the latter, and the sliced video applied to the D input of flip-flop 108. The flip-flops are both reset at the beginning of each field by vertical sync pulses applied to their respective "CLEAR" inputs. Here the similarity with the vertical transition detector ends; the clock inputs to the flip-flops, instead of being a sequence of pulses separated by 1H and spanning several lines, is a sequence of pulses separated by a period of time equal to one cycle of the 14MHz system clock, all of which span a portion of only one horizontal television line. This pulse sequence is generated by a 3-input AND gate 112, the output of which goes high only when all three inputs go high. Depending on the position of a switch shown schematically at 114, one of the inputs is either a horizontal cursor from a horizontal cursor generator 116 having a joy stick 118 for manipulating the position of the cursor on the display, or a horizontal tracking window from a tracking window generator 119; both comprise a sequence of pulses separated by 1H and in which the number of pulses is equal to the height of the cursor or the height of the tracking window, as the case may be. A second input to the AND gate is a "line select" input, which is high for a period of 1H, for selecting just one of the pulses from the cursor or tracking window sequence; i.e., for selecting just one television line on which detector 106 is to be enabled. The "line select" input is produced by a line select generator 150, (the operation of which will be described later) and selects the television line on which the detecror will be active, while the horizontal cursor or horizontal tracking window (whichever is present) selects at what point along this selected TV line the detector will be active. At this portion of the line where both of the described inputs are high the output of AND gate 112 will be high whenever the third input, the 14MHz system clock, is high, and will be low when the system clock is low. The period of one sample of this clock being equal to the sampling period of A/D converter 102, is also equal in time to the smallest incremental change in horizontal delay the delay device 104 is able to provide toward effecting horizontal stabilization.

It was seen from the description of the vertical stabilizer that the flip-flops could in that case store the output of slicer 30 at two different points in time separated by the period of clock inputs to the flip-flops. Flip-flops 108 and 110 perform a similar function in the horizontal stabilizer, and since the clocks are one cycle of the 14MHz clock apart, detector 106 detects transitions between adjacent picture samples in the sliced video, rather than between the same points on adjacent picture lines as was the case in the vertical stabilizer. Thus, the Q output of flipflop 110, labelled A, is the slicer output at time=T, and the output B of flip-flop 108 is the slicer output at time=T+1 clock cycle. This permits a comparison to be made between A and B to ascertain whether a horizontal transition has occurred; using a logic circuit 122 having the truth table shown in FIG. 1, and ignoring the effect of operation of a selector switch 124, a "true" output is produced only when A is low and B is high, or when A is high and B is low. Switch 124 permits the operator to select between the L-H and H-L transitions, or to use both, the choice being determined by the nature of the vertical reference edge available in the scene. In the example shown in FIG. 3, the left hand edge 130 of the dark door 42 against the bright wall 44 would provide a good reference for measurement of side-to-side motion of the picture in which it is contained. This edge is an example of high-to-low transition (i.e., from white to black) and the opposite edge of the door is an example of a low-to-high transition.

During start up, with switch 114 in its "START" position, the vertically disposed edge in the scene chosen to be the reference is electronically selected by positioning the cursor over the chosen edge. Under control of display generator 36 the cursor appears on monitor 38 as a horizontally disposed narrow rectangle 132 having greater illumination intensity, or preferably a different color, than that of the black and white sliced video, and as in the case of the vertical stabilizer can be moved to any desired position on the display by manipulation of joy stick 118. In the illustrated example the cursor has been positioned to straddle the vertical edge 130 so as to "look at" the points of intersection of the vertical edge with selected horizontal lines in the raster so as to specify such points on edge 130 as the picture contained reference for measurement of side-to-side motion.

When detector 106 has detected the transition selected by the operator-positioned cursor, logic 122 produces a "true" output which is applied to a circuit 140 which throws switch 114 from its "START" to its "RUN" position, thereby to cause the pulse sequence representing the horizontal tracking window to be applied to AND gate 112. This output signal is also applied to display generator 36 which causes the window to appear on monitor 38 as a horizontally disposed rectangle, and to the "STOP" input of a position counter 142, the function of which is to continuously determine, at field rate, the horizontal position of the selected reference edge. The counter is started at the beginning of each television line in response to horizontal sync pulses derived, for example, from sync stripper 12 (FIG. 1) and applied to the "RESET" terminal, and is clocked by the system clock which, as has been noted, typically is a train of pulses spaced by about 70 nanoseconds. The counter continues to count until the vertical reference edge is encountered, whereupon a "true" signal from logic 122 applied to the "STOP" terminal stops the counter. When the counter is stopped it produces at its output terminal a number representative of the current position of the vertical reference line; i.e., the number of system clock intervals from the left-hand end of the selected horizontal line. This number is compared in a comparator 144 with the number stored in a latch 146 representing the position of the vertical edge one field earlier and produces an output, designated $\triangle P$, which represents the amount and direction of shift, if any, in the horizontal position of the vertical reference line that has taken place since the preceding field. This signal is applied to an H-delay interface 147 and adjusts the delay of delay device 104 relative to the aforementioned nominal delay to compensate for the measured horizontal shift of the reference edge. As in the case of vertical stabilization, there is a practical limit to the number of picture samples by which the picture can be shifted, either right or left, without running into unacceptable "cropping" of the displayed picture. Recalling that ±8 television lines, or ±16 frame lines (which represents 6.6% of total active picture height) is a practical limit for vertical stabilization, if horizontal stabilization is correspondingly limited to 6.6% of the active picture width the correction range is approximately ±26 system clock intervals or approximately 3.6 microseconds. The vertically and horizontally stabilized signal produced at the output of delay device 104, which may be cropped by as much as about 6.6% of the active picture height and width, is converted to analog form by a digital to analog converter 105 and then, if desired, is applied to a picture expander 107, such as the known "electronic zoom" system, for expanding the video signal so as to produce a picture of normal full height and width.

The function of position predictor 120 is analogous to that of the position predictor in the vertical stabilizer, namely, to automatically position the horizontal tracking window such that its active region is centered over the expected or predicted position of the vertical reference edge, such centering occurring orthogonally to the cursor-controlled axis, stored in a V position Latch 121, of the tracking window. The predictor decides where to center the tracking window by adding the previous position of the reference to its previous change in position; i.e., by looking at where the reference edge was last seen and how much and in which direction it was moving, the predictor determines where it can be expected to be "seen" in the next field. To provide a margin for error in the event of a change in velocity of movement of the reference edge from what it was at last look, the active region must have sufficient length to accommodate to such velocity changes; however, it should not be longer than necessary for this purpose since the longer it is the greater the chance that some other vertical edge in the picture might intrude into the horizontal tracking window and be confused with the selected reference edge. Thus, provision is made for the operator to select, by operation of switch 134, a tracking range of either nine, twenty-one, or forty-five picture samples. The predictor may be of the form shown in Figure 2 in which (as has been noted earlier) the parameters for horizontal stabilization are enclosed in parathenses. As used for horizontal stabilization, the three inputs to the predictor are: (1) a signal indicative of the width of the active region of the tracking window, namely, nine, twenty-one or forty-five picture samples; (2) a signal $\triangle P$ from the output of comparator 144 indicative of the change in position of the selected vertical edge between the two previous successive fields; and (3) a signal from the output of position counter 142. The predictor "looks at" the detected motion between these two previous successive fields and utilizes this information to adjust the position of the center of the horizontal tracking window, this being the only portion of the picture in which transition detector 106 is enabled. Latch circuit 90 receives from position counter 142 a digital number representative of the picture sample position in which the vertical reference edge occurred in the next previous field, and latch 92 receives a signal $\triangle P$ indicative of the change in position of the reference edge from what it was in the field before the next previous field to what it is in the next previous field. These inputs are each clocked out at field rate in response to application of horizontal sync pulses derived from sync stripper 12 (for example) and are respectively applied to the input terminals B and A of summing circuit 94; thus, the number $P_{-1}$, the picture sample position of the reference edge in the next previous field is added to $\triangle P$, which may be thought of as $P_{-1}$-$P_{-2}$, where $P_{-2}$ is the position of the reference edge in the field before the next previous field. The sum of $P_{-1}+\triangle P=P'$ is the predicted position of the reference edge in the next-to-occur field. The sum signal $P'$ is applied to the input terminal B of comparator 96 where it is compared with the directly applied output from position counter 142. The output of the comparator is high when the predicted position $P'$ is equal to the present position plus or minus T, and after initial startup is applied to tracking window generator 119 and establishes the active region of transition detector 106. As in the case of the vertical stabilizer, operation of position predictor 120 assumes that camera motion, and thus the motion of the reference vertical edge, is in the same direction over a period of several frames and that changes in motion are gradual. Reversals in the direction of side-to-side motion, or changes in velocity of such motion, are accommodated by the width of the horizontal tracking window.

The organization and function of the horizontal stabilizer having been described, attention is now directed to precautions that must be taken to ensure proper operation in an NTSC environment. Recalling that the output from PROC AMP 20 of the vertical stabilizer (Figure 1) is a composite NTSC signal, the presence of the chrominance subcarrier may introduce problems in the measurement and application of compensating delays in the horizontal delay device. Among several techniques for implementing delays in the NTSC signal without affecting the phase of the color subcarrier relative to the reference burst is to separate the encoded signal into its luminance and chrominance components, subject the components to the required delay, demodulate the chrominance signal, re-modulate with a color subcarrier of the correct phase, and then recombine the re-modulated chrominance with the luminance component, all as taught in commonly assigned Pat. No. 4,291,839 to Rossi. The result would be a horizontally corrected video signal in which the color subcarrier is in correct phase relationship with the the color burst signal.

The color subcarrier of the NTSC system may also create errors in the measurement process for determining the necessary delay compensation of the horizontal stabilizer. The problem results because of the four field cycle of the subcarrier, and even though an effort is made to base measurements (for both vertical and horizontal stabilization) on the luminance component only, a sufficient amount of subcarrier is present in the output of slicer 30, particularly upon occurrence of saturation level chrominance, to create such errors. The problem and the technique necessary to avoid it can be understood by observing vertically disposed white-black transitions within the tracking window used as the reference edge for measuring horizontal motion. To demonstrate the subcarrier phase relationship, FIG. 7 illustrates the lines within the tracking window as they occur in four successive fields. On line 40 of field 1 subcarrier phase will be assumed to be 0° at the point of the transition at the output of slicer 30. In field 2 the closest frame line to line 40 within the tracking window is line 303, 263 lines after line 40. Here the subcarrier has a 180° phase difference from line 40 along the same vertical position. If this line is used to sample the horizontal position, the reversal of phase may cause the slicing point to change slightly to the left or right, causing an incorrect error to be generated. To sample a line containing the same phase, it is necessary to go to line 304, 264 lines after line 40. In field 3, it can be seen that it is necessary to sample line 41, not line 40, which is 262 lines after line 304. In field 4 line 303, 262 lines after line 41, is used which completes the four field cycle and line 40 is again sampled in the next field. It becomes evident that the subcarrier phase is identical an even number of lines later and 180° different an odd number of lines later. Thus a line selector circuit 150 utilizing a flip-flop 152 which is clocked by H, will have an output which is high for every even numbered line and low for every odd numbered line. This is used to chose the line within the tracking window which satisfies the correct phase relationship.

As background for the discussion to follow, it is important to remember that the delay device 16 of the vertical stabilizer is altered back and forth between a field delay mode and a frame delay mode in order to achieve frame line correction. It is also important to keep in mind that any correction must be applied to the field in which the displacement of the reference edge is detected. Since the detector of the horizontal stabilizer (Figure 5) is fed the same signal as the input to the vertical stabilizer, while the input signal to horizontal stabilizer is the output from the vertical stabilizer, the delay between detection and correction of horizontal motion varies. The detector of the horizontal stabilizer requires the period of one field to produce an error signal; therefore, when the delay device 16 of the vertical stabilizer is in the field delay mode a given field will reach the delay device of the horizontal stabilizer at the same point in time that the error signal for that particular field becomes available. Therefore, the correction can be applied during the immediately following vertical blanking interval and the entire field will receive the proper horizontal correction. However, if the delay device 16 of the vertical stabilizer is in the frame delay mode, then a given field will reach the delay unit 104 of the horizontal stabilizer one field later than the time when the error signal for that particular field is available; consequently, the error signal must also be delayed by an additional field. This is accomplished by latching the error signal in the H-delay interface 147 for the duration of one field before applying it during vertical blanking to delay unit 104. Whether or not the delay is inserted is controlled by a signal from store interface 22 of the vertical stabilizer indicative of which delay mode the vertical stabilizer is in.

Although the described system acceptably performs the desired function, the fact that each or both of the selected horizontal and vertical reference edges may in some situations move both horizontally and vertically makes it inconvenient and often difficult for the operator to keep the system "locked on" to the selected reference edges. The nature of the problem will be best understood by consideration of a specific example. Considering first a situation where simultaneous horizontal and vertical motion does not present a problem, imagine a scene in which a telephone pole extends beyond the top and bottom of the picture, an ideal reference for horizontal stabilization. It will be recalled that in the above system a joystick-controlled cursor is positioned over a portion of the pole to initialize the horizontal stabilization portion of the system, and once initialized the horizontal stabilizer "looks" for this reference edge once every field at the vertical position determined by the joystick and at a horizontal position centered at a point computed by adding its previous motion to its previous horizontal position. Thus, the operator is required to keep the vertical position of the joystick-controlled cursor at a position somewhere between the top and bottom of the vertical reference edge. If a telephone pole is available as the vertical reference there is no problem since the picture could move a large distance vertically, either up or down, before the cursor would have to be moved. However, most real world scenes do not present such convenient objects for use as references. Suppose, for example, that instead of a telephone pole the only object in the scene that might serve as a vertically disposed reference edge is a stop sign which may be only one-tenth or one-twentieth of the total picture height. As in the case of the telephone pole, the operator can position the cursor on the sign post and use it for horizontal stabilization. However, if the picture moves up or down by a substantial amount, the operator is presented with the difficult task of maintaining the cursor between the top and bottom extremities of the signpost. The shorter the reference object is relative to the overall height of the picture, the more precise is the requirement for vertical positioning of the cursor on the vertical reference edge. To simplify the operator's task in situations of the type described, and in situations where the scene is complex and offers only short reference edges, the system desirably should be capable of automatically moving the horizontal reference selection cursor vertically and in the same direction as the picture is moving, and of also moving the vertical reference selection cursor horizontally in the same direction and by the amount the picture is moving horizontally.

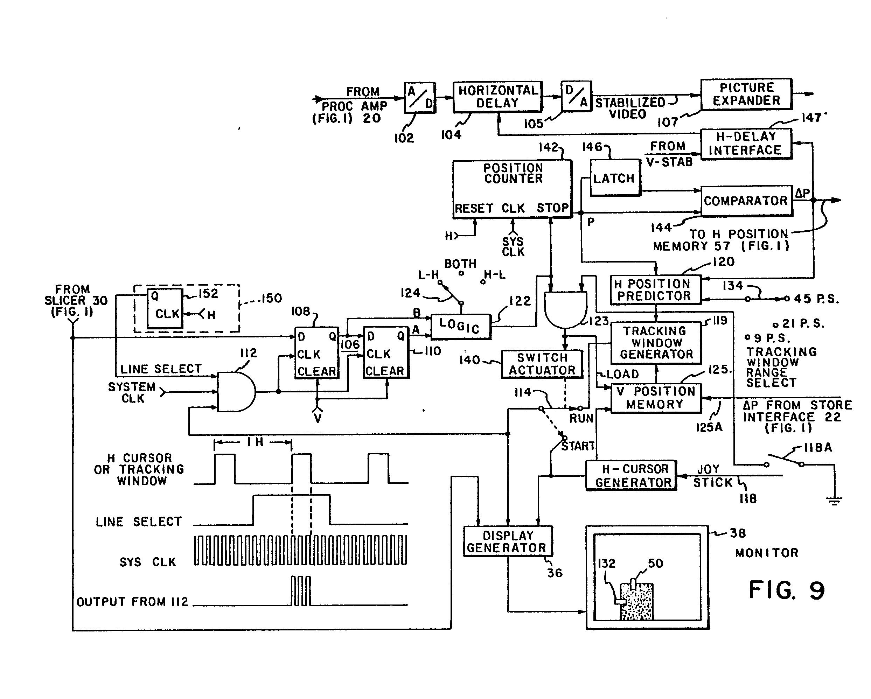

These desired results are achieved by modifying the vertical and horizontal stabilizing systems of Figures 1 and 5 as shown in Figures 8 and 9, respectively. Since Figures 8 and 9 differ from Figures 1 and 5 in the addition of first memory means (57) for storing information representing an initial position of a first tracking window horizontally along a horizontally disposed reference edge (in Figure 8), and second memory means (125) for storing information representing an initial position of a second tracking window vertically along a vertically disposed reference edge (in Figure 9), the description of these figures will be limited to the modifications, with only such reference to the rest of the system as necessary for an understanding of the overall operation.

Referring to Figure 8, as in the system of Figure 1, the horizontal edge in the scene chosen as the reference for measuring up and down motion of the picture, for example, the top edge 40 of the dark door 42 illustrated in Figure 3, is electronically selected by a cursor 50 which is generated by a vertical cursor generator 52 and under control of display generator 36 is displayed on the monitor as a rectangle having greater illumination intensity, or a different color, than that of the displayed sliced video. The left hand vertical edge of cursor 50 defines a vertical line along which the detector looks for a horizontal edge, its horizontal width being unimportant other than that some finite width is required to enable the operator to see it. In the preferred embodiment, cursor 50 is displayed in color and, therefore, must be at least several cycles of the color subcarrier in width.

The position of the cursor 50 on the display is electronically manipulated up and down and from left to right by a joystick schematically shown at 54; by properly manipulating the joystick, which is operatively associated with cursor generator 52 and display generator 36, the operator can position the cursor at any desired location on the display. The illustrated example assumes that the cursor has been positioned to straddle the horizontal edge 40 so as to "look at" the point of intersection of the left hand edge of cursor 50 with the horizontal edge 40 and thus specify such point on edge 40 as the picture-contained reference for measurement of up and down picture motion.

The V-cursor, produced by a digital waveform 68 which is high whenever a portion of the video covered by the cursor is being scanned, is applied to display generator 36 and displayed as a vertically disposed rectangle on monitor 38, and is also applied to the clock input of each of flip-flops 64 and 66, the Q outputs of which are applied as respective inputs to logic circuit 70 to provide an indication of whether or not a vertical transition has occurred. The high output of logic 70 when a reference transition is found is applied to the "STOP" terminal of position counter 80 as one input to an AND gate 73 which, when a high is simultaneously applied to its second input (from a source to be described), produces an output signal which activates the switch actuator 60, which in turn, throws switch 58 from its "START" to "RUN" position; when the switch is in the latter position, transition detector 62 looks for a reference transition within a region defined by a vertical tracking window produced by tracking window generator 55 and position predictor 56. The waveform of the vertical tracking window is identical to waveform 68 of the vertical cursor except that it has fewer pulses per field; typically, it consists of either three, seven or fifteen pulses per field, selectable by the operator by actuation of a switch 74, corresponding to a vertical tracking window height of three, seven or fifteen television lines. The significance of this selectability, and the function of the position predictor and the tracking window, will be evident from a later description thereof.

Before proceeding with the description, it will be useful to review the functions of the cursor and the tracking window, and how the position predictor and the provision of memory to store horizontal position affect the tracking window; although the horizontal stabilizer (to be described) also employs a cursor, a tracking window and a predictor, because its operation is closely analogous, the present description will be limited primarily to the vertical stabilizer. During startup of vertical stabilization, that is, at any time when a reference edge is being selected by joystick manipulation by the operator, the system "looks" for a reference in the region determined by the left vertical edge of the cursor.

When the cursor intersects the selected reference edge, transition detector 62 manifests the detection by logic 70 producing and applying a voltage high to one input of AND gate 73, and the operator, visually observing the intersection of cursor 50 and reference edge 40 on monitor 38, then actuates a switch 54A, which may be carried on or built into joystick 54, which is operative to apply a voltage high to the second input of AND gate 73. Simultaneous voltage highs at the inputs to gate 73 causes switch actuator 60 to move switch 58 to the "RUN" position and the stabilizer thereafter "looks" for the selected reference edge within the region defined by the tracking window from generator 55. The tracking window moves with or vertically tracks the motion of the reference edge and is a "window" through which the stabilizer looks for the reference edge. Whereas in the system of Figure 1 the position of the left hand edge of the tracking window corresponds to the position the left edge of the cursor was in at the time of transition from the "START" to the "RUN" mode, and is locked in that position, in the Figure 8 system the position of the left edge of the cursor at the time of transition from "START" to "RUN" is stored in horizontal position memory 57, the loading of which is initiated by a signal from the output of gate 73 applied over line 59 which, it will be recalled, occurs when the operator actuates switch 54A simultaneously with logic 70 applying a high to the gate. Memory 57 preferably takes the form of a digital counter which can be incremented and decremented by pulses applied to an input terminal 57A, and the position information is in the form of a digital number; there being about 1000 possible horizontal positions at which the left edge of the tracking window might be initially located, its precise position is represented by a finite digital number between zero and approximately 1000. Counter 57 is incremented or decremented by pulses applied to terminal 57A from a horizontal stabilizer (to be described with reference to Figure 9) representative of side-to-side movement of the picture caused by camera unsteadiness; it counts up in response to horizontal motion of the picture to the right and this new number applied to tracking window generator 55 moves the tracking window to the right, and, conversely, it counts down and causes the tracking window to move to the left when the horizontal stabilizer detects right-to-left picture movement. Thus, the horizontal position of the tracking window used for vertical stabilization automatically follows side-to-side movement of the picture. The vertical position of the tracking window along this horizontally movable edge is established by the predictor 56, in the manner described above with reference to Figure 1. An important feature of this system is that after startup the tracking window continues to follow (i.e., locks onto) a selected horizontal reference edge even if the edge moves from side-to-side.

Turning now to a description of the modified horizontal picture stabilizer illustrated in Figure 9, during start up, with switch 114 in its "START" position, the vertically disposed edge in the scene chosen to be the reference is electronically selected by positioning the cursor over the chosen edge. Under control of display generator 36 the cursor appears on monitor 38 as a horizontally disposed narrow rectangle 132 which can be moved to any desired position on the display by manipulation of joystick 118. When detector 106 has detected the transition selected by the operator-positioned cursor, logic 122 produces a "true" output which is applied to the "STOP" input of position counter 142 and also as an input to an AND gate 123 which, when an operator-initiated high is simultaneously applied to its second input, produces an output signal which activates switch actuator 140 which, in turn, throws switch 114 from its "START" to its "RUN" position, thereby to cause the pulse sequence representing the horizontal tracking window to be applied to AND gate 112. This pulse sequence is also applied to display generator 36 which causes the window to appear on monitor 38 as a horizontally disposed rectangle.

The function of position predictor 120 is analogous to that of the position predictor in the vertical stabilizer, namely, to automatically position the horizontal tracking window such that its active region is centered over the expected or predicted position of the vertically disposed reference edge, such centering occurring orthogonally to the axis of the tracking window. The vertical position of the axis of cursor 132 at the time of the transition from "START" to "RUN" is stored in a vertical position memory 125, the loading of which is initiated by the output signal from AND gate 123, which occurs when the operator actuates a switch 118A, preferably carried on joystick 118, to apply a voltage high to an input of gate 123 coincident with application thereto of a voltage high from logic 122. Memory 125 may also take the form of a counter which can be incremented and decremented by pulses applied to a control terminal 125A derived from store interface 22 (Figure 8) of the vertical stabilizer. The memory is initially loaded with a digital number representing the position at which the horizontal cursor is at the time of the transition from "START" to "RUN"; this number is stored in the memory and will be incremented or decremented by a vertical correction signal $\triangle P$ from the vertical stabilizer in a manner to cause the vertical axis of the tracking window to automatically follow up and down motion of the picture. The predictor decides where to horizontally center the tracking window by looking at where the reference edge was last seen and how much and in which direction it was moving, and predicting where it can be expected to be "seen" in the next field.

It will have been seen from the foregoing that the modifications of the stabilizer system embodied in Figures 8 and 9 simplify the operator's task by separately storing initial positions of selected horizontal and vertical reference edges and updating these stored positions in accordance with detected picture motion to correspondingly and automatically control the positions of the tracking windows in directions to keep them engaged with their respective selected reference edges in spite of significant picture movement.

It will have been seen from the foregoing that the signal processing system of the invention satisfies the objective of detecting and measuring picture unsteadiness in recorded or live video and the displayed picture. The system separately measures up and down and side-to-side motion, and although in the described embodiments the horizontal correction is applied to an already vertically stabilized signal to produce a corrected signal stabilized in both directions, this is not essential and it is within the contemplation of the invention to separately horizontally stabilize the input video signal. Also, it will be appreciated that in case complete stabilization is not essential or desired, the vertical and horizontal stabilization portions of the system can each be utilized independently of the other.

The described system may also be used to generate signals for achieving certain special effects, as by using one video source for generating a correction signal and applying the correction to a video signal from another source. For example, a first video signal representing a boat bouncing up and down on a rough sea might be used to generate the correction signal necessary to stabilize the position of the boat; however, instead of using the correction signal to stabilize the first source, the correction signal may be applied to a second different video signal representing, for example, a static boat in a studio scene which by using suitable known chroma keying techniques might be inserted into a desired background signal. The correction signal applied to the static scene video would cause that video to move as dictated by the correction signal, thereby creating the illusion that the boat is moving up and down in the studio scene just as the one in the live scene had. This can be done either by simultaneously generating the first and second video signals and transferring the correction signal to the static scene, or generating and recording the correction signal, on a floppy disk for example, and later playing it back and applying it to the second video signal.

Although the description of the stabilizer implied immediate application of the correction signal, it is possible (as has just been suggested), and in some situations preferred to store the correction signal in its digital form for later application or possible revision before actually using it. For example, assuming that a three or four minute segment of video requires stabilization, but that on the first pass the operator was able to get most of it stabilized except for a few places where the stabilization could be improved, having the "first pass" correction signal stored enables the operator to go back and improve those places, perhaps by using a different reference edge in just that portion of the segment requiring improvement. That is, the correction signal applicable to only a small portion of the total segment can be altered without having to do the whole segment over again. Stated another way, by recording the correction signal, off-line as it were, the operator can develop a good correction signal for the whole segment by doing it in pieces, picking out whichever reference edge at the time happened to be best for that portion of the scene.

Techniques other than those described for measuring image motion against a stable reference, including edge trackers, gate trackers and correlation trackers, can with suitable modification be utilized, and the several parts of each of the vertical and horizontal stabilizers can be implemented differently than described while performing comparable functions.

## Claims

1. A system for producing a correction signal ($\triangle$P) representative of unsteadiness in a camera-produced input video signal (10) comprising means receiving a camera-produced input video signal (10) exhibiting unsteadiness, correlation means comparing successive picture images of the input video signal to identify a corresponding picture element, and means (80, 84) for measuring the motion of the corresponding picture element between successive images and producing a correction signal ($\triangle$P) representative of such measured motion; characterised in that the system is a post production system, in that the correlation means comprises means (52, 55, 57; 116, 119, 121) to enable an operator subjectively to select from within the field of view (38) of the camera as recorded in the input video signal (10) a reference edge (40, 130) which, but for the unsteadiness, is stationary, and in that the reference edge (40, 130) defines the picture element which is used by the means (80, 84) for measuring the motion of the picture.

2. A system according to claim 1, wherein the means to enable an operator selectively to select comprises means for separately selecting from the input video signal at least one of a horizontally disposed reference edge (40) and a vertically disposed reference edge (130) within the camera field of view against which to measure up and down and side-to-side motion, respectively, and wherein the measuring means comprises means for separately measuring motion of the selected one or ones of the reference edges to produce vertical or horizontal correction signals respectively.

3. A system according to claim 1 or 2, wherein the system further comprises: means for modifying a picture-representing video signal with the correction signal for adjusting the position of the overall picture represented by the picture-representing signal responsively to the correction signal.

4. A system in accordance with claim 1 or 2, comprising means (22, 16) operative responsively to the correction signal for making the necessary corrections to the overall television picture represented by the input video signal to eliminate picture unsteadiness.

5. A system in accordance with claim 4, as appendant to claim 2, wherein the correction-making means is operative responsively to a selected one or ones of the correction signals.

6. A system according to claim 5, wherein the correction-making means includes separate means for making vertical corrections to the television picture to eliminate up and down motion, which means comprises: first delay means (16, Figure 1) having a controllable delay time connected to receive the input video signal and operative responsively to the vertical correction signal to vary its delay time in integral line increments in a direction and by an amount necessary to substantially eliminate up and down motion of the horizontally disposed reference edge (40).

7. A system according to claim 6, wherein the input video signal is a field-interlaced signal, and wherein the first delay means (16) is a digital store having a controllable delay time of at least one television field.

8. A system according to claim 7, wherein the means for measuring the motion of the horizontally disposed reference edge comprises means for comparing the vertical position of the horizontally disposed reference edge in successive corresponding fields and producing for each such comparison a vertical correction signal indicative of the number of television lines of position change, if any; and wherein the digital store is operative responsively to the vertical correction signal to vary its delay in a direction and by an amount equal to the integral number of television lines sufficient to produce at the output of the store a vertically stabilized video signal in which the horizontal disposed reference edge is maintained at substantially the same vertical position.

9. A system according to claim 6, 7, or 8, wherein the correction-making means includes means for separately making horizontal corrections to the television picture to eliminate side-to-side motion, which means comprises: second delay means (104, Figure 5) having a controllable delay time and operative responsively to the horizontal correction signal to vary the delay thereof in system clock period increments in a direction and by an amount necessary to substantially eliminate side-to-side motion of the vertically disposed reference edge (130).

10. A system according to claim 9, wherein the means for measuring motion of the vertically disposed reference edge comprises means (144) for comparing the horizontal position of the vertically disposed reference edge in successive fields and for each comparison producing a horizontal correction signal ($\triangle$P) indicative of the number of system clock intervals change of position, if any.

11. A system according to claim 9 or 10, wherein the second delay means (104) receives the vertically stabilized video signal from the first delay means (16) for producing at its output a vertically and horizontally stabilized video signal.

12. A system according to any of claims 5 to 11, wherein the means for selecting a reference edge comprises: means (30) for slicing the input video signal for producing signals representing a transition in contrast caused by an edge occurring within the camera field of view; means including a television monitor (38) for visually displaying the sliced video signal; means (52) for producing an electronic cursor (50) positionable (54) on the monitor by an operator to intersect an edge of interest (40) in the displayed sliced video; and means (70) operative responsively to the intersection of the cursor with a selected edge for producing transition-indicating signals for use in measuring motion of the selected edge.

13. A system according to claim 12, wherein the cursor-producing means includes means for producing a first vertically disposed cursor (50), for selecting a horizontally disposed edge of interest, and means for producing a second horizontally disposed cursor (132) for selecting a vertically disposed reference edge of interest.

14. A system according to claim 13, wherein the means for measuring motion of a selected horizontally disposed reference edge comprises: first counting means (80) connected to be clocked at the line rate of the input video signal, to be successively reset at the field rate of the input video signal and to be stopped by a transition-indicating signal for producing an output count (P) indicative of the position of the line containing the selected reference edge, and means (84) for comparing each such vertical position-indicating count (P) with the position-indicating count produced in the next previous corresponding field and for each such comparison producing a vertical correction signal ($\triangle$P).

15. A system according to claim 13 or 14, wherein the means for measuring motion of a selected vertically disposed reference edge comprises: second counting means (142) connected to be clocked at a rate corresponding to the reciprocal of the picture element interval of the input video signal, to be successively reset at the line rate of the input video signal, and to be stopped by a transition-indicating signal for producing an output count indicative of the position of the selected vertically disposed reference edge along a line selected by the horizontally disposed cursor, and means (144) for comparing each such horizontally disposed position-indicating count with the position-indicating count produced in the next previous field and for each such comparison producing a horizontal correction signal ($\triangle$P).

16. A system according to claim 14, wherein the means for measuring motion of a selected horizontally disposed reference edge further comprises: means (56, 55) operative responsively to the output count of the first counting means (80) and to the vertical correction signal ($\triangle$P) for producing a first tracking window (3H, 7H, or 15H) which automatically locks onto and tracks the selected horizontally disposed reference edge and for predicting its position in the next succeeding corresponding field.

17. A system according to claim 15, wherein the means for measuring motion of a selected vertically disposed reference edge further comprises: means (120, 119) operative responsively to the output count (P) of the second counting means (142) and to the horizontal correction signal for producing a second tracking window (9, 21 or 45 P.S.) which automatically locks onto and tracks the selected vertically disposed reference edge (130) and for predicting its position in the next succeeding field.

18. A system according to claim 15 or 17, wherein the input video signal is an NTSC television signal in which the phase of the colour subcarrier has a four field sequence (Figure 7), and wherein the means for measuring motion of a selected vertically disposed reference edge includes means for recycling the line selected by the horizontally disposed cursor in a four-field sequence for causing the colour subcarrier at the vertically disposed reference edge to have the same phase in successive fields.

19. A system according to any of claims 12 to 18, wherein the input video signal is a colour television signal containing luminance and chrominance components, and wherein the slicing means includes means (LPF 28) for substantially removing the chrominance component of the input video signal prior to slicing.

20. A system according to any of claims 5 to 11, wherein each measuring means comprises: first (55) and second (119) generating means for generating first and second tracking windows for respectively tracking the horizontally and vertically disposed reference edges (40, 130); first memory means (57, Figure 8) operatively associated with the first generator (55) for storing information representing an initial position of the first tracking window (50) horizontally along the horizontally disposed reference edge (40) and responsively to the horizontal correction signals ($\triangle$P, 144) altering the horizontal position of the first tracking window to follow side-to-side motion of the horizontally disposed reference edge; and second memory means (125, Figure 9) operatively associated with the second generator (119) for storing information representing an initial position of the second tracking window vertically along the vertically disposed reference edge and responsively to the vertical correction signals ($\triangle$P, 22) altering the vertical position of the second tracking window to follow up and down motion of the vertically disposed reference edge.

21. A system according to claim 20, wherein the system further includes separate operator-controllable means (54A, 118A) for initializing the storage in the first and second memory means of information representing the initial positions of the horizontally and vertically disposed reference edges, respectively.

22. A system according to claim 20 or 21, wherein the first and second memory means are digital counters in which the position-representing information is stored in the form of binary numbers, the magnitude of which is adapted to be incremented responsively to the

17

horizontal and vertical correction signals, respectively.

23. A system according to claim 20, 21 or 22, wherein the means for selecting a reference edge comprises means (30) for slicing the input video signal for producing signals representing a transition in contrast caused by an edge; means including a television monitor (38) for displaying the sliced video signal; means for producing an electronic cursor including operator-controllable means for positioning the cursor on the monitor to intersect a selected reference edge; and wherein the system further comprises means (73, 123), operative responsively to the simultaneous intersection of the initializing means, for storing in the memory means information representing the then position of the cursor as the initial position of a tracking window and for displaying the tracking window on the monitor.

24. A system according to claim 23, wherein the last mentioned means includes a gate circuit (73, 123) having at least first and second inputs and an output, means (70) operative responsively to intersection of the cursor with a selected reference edge for producing and applying to a first input of the gate circuit a transition-indicating signal, and wherein the initializing means is operative to apply to a second input of the gate circuit a signal having characteristics such that when applied simultaneously with a transition-indicating signal a signal (LOAD, 59) is produced at the output of the gate circuit for initializing storage in the memory means.

**Patentansprüche**

1. Ein System zur Erzeugung eines Korrektursignals (△P), welches ein Maß für die Unruhe in einem kameraerzeugten Eingangsvideosignal (10) ist, mit einer Einrichtung, der ein kameraerzeugtes unruhiges Eingangsvideosignal (10) zuführbar ist, mit einer Korrelationsschaltung, welche aufeinanderfolgende Bilder des Eingangsvideosignals zur Identifizierung eines entsprechenden Bildelementes miteinander vergleicht, und mit einer Meßschaltung (80, 84) zur Messung der Bewegung des entsprechenden Bildelementes zwischen aufeinanderfolgenden Bildern und zur Erzeugung eines Korrektursignals (△P), welches ein Maß für eine solche gemessene Bewegung ist, dadurch gekennzeichnet, daß das System ein Nachbearbeitungssystem ist, daß die Korrelationsschaltung eine Einrichtung (52, 55, 57; 116, 119, 121) enthält, die dem Kameramann die subjektive Wahl einer bis auf die Unruhe stationären Bezugskante (40, 130) innerhalb des Bildfeldes des Kamera (38), wie es in dem Eingangsvideosignal (10) aufgezeichnet ist, erlaubt, und daß die Bezugskante (40, 130) ein Bildelement definiert, welches von der Bildbewegungs-Meßschaltung (80, 84) ausgenutzt wird.

2. System nach Anspruch 1, bei welchem die dem Kameramann eine wahlweise Auswahl erlaubende Einrichtung eine Schaltung zur separaten Auswahl mindestens einer im Kamerasichtfeld horizontal verlaufenden Bezugskante (40) oder vertikal verlaufenden Bezugskante (130) enthält, gegenüber welcher auf und abwärts bzw. seitliche Bewegungen zu messen sind, und in welchem die Meßschaltung eine Einrichtung zur getrennten Messung einer Bewegung der ausgewählten Bezugskante(n) zur Erzeugung horizontaler bzw. vertikaler Korrektursignale enthält.

3. System nach Anspruch 1 oder 2, welches ferner eine Schaltung zur Modifizierung eines bilddarstellenden Videosignals mit dem Korrektursignal für die Justierung der Position des durch das bilddarstellende Signal dargestellten Gesamtbildes in Abhängigkeit von dem Korrektursignal aufweist.

4. System nach Anspruch 1 oder 2 mit einer Schaltung (22, 16), die in Abhängigkeit von dem Korrektursignal die notwendigen Korrekturen des durch das Eingangsvideosignal dargestellten Gesamtfernsehbildes zur Eliminierung von Bildunruhen durchführt.

5. System nach Anspruch 4 in Abhängigkeit von Anspruch 2, bei welchem die die Korrektur durchführende Schaltung in Abhängigkeit von einem oder mehreren ausgewählten Korrektursignalen arbeitet.

6. System nach Anspruch 5, bei welchem die die Korrektur durchführende Schaltung eine separate Schaltung zur Durchführung von Vertikalkorrekturen des Fernsehbildes für die Eliminierung von Auf- und Abwärtsbewegungen enthält und daß diese Schaltung eine erste Verzögerungseinrichtung (16, Fig. 1) mit einer steuerbaren Verzögerungszeit aufweist, welcher das Eingangsvideosignal zugeführt wird und welche in Abhängigkeit von dem Vertikalkorrektursignal ihre Verzögerungzeit in ganzen Zeilenschritten in einer Richtung und einem Ausmaß, wie es zur praktischen Eliminierung von Auf und Abwärtsbewegungen der horizontal verlaufenden Bezugskante (40) erforderlich ist, verändert.

7. System nach Anspruch 6, bei welchem das Eingangsvideosignal ein Halbbildzeilensprungsignal ist und bei welchem die erste Verzögerungseinrichtung (16) ein Digitalspeicher mit einer steuerbaren Verzögerungszeit von mindestens einem Fernsehhalbbild ist.

8. System nach Anspruch 7, bei welchem die Meßschaltung für die Bewegung der horizontal verlaufenden Kante eine Schaltung zum Vergleichen der Vertikalposition der horizontal verlaufenden Bezugskante in aufeinanderfolgenden entsprechenden Halbbildern und zur Erzeugung eines die Anzahl von Fernsehzeilen einer eventuellen Positionsänderung anzeigenden Vertikalkorrektursignals für jeden solchen Vergleich enthält, und bei welchem der Digitalspeicher in Abhängigkeit von dem Vertikalkorrektursignal seine Verzögerungszeit in einer Richtung und einem Ausmaß verändert, welches gleich der ganzen Anzahl von Fernsehzeilen ist und ausreicht, um am Ausgang des Speichers ein vertikal stabilisiertes Videosignal zu erzeugen, in welchem die horizontal verlaufende Bezugskante in praktisch derselben Vertikalposition erhalten wird.

9. System nach Anspruch 6, 7 oder 8, bei welchem die die Korrektur durchführende Schaltung eine Schaltung zur separaten Durchführung horizontaler Korrekturen im Fernsehbild zur Eliminierung seitlicher Bewegungen enthält und wobei diese Schaltung eine zweite Verzögerungseinrichtung (104, Fig. 5) mit steuerbarer Verzögerungszeit aufweist, die in Abhängigkeit von dem Horizontalkorrektursignal ihre Verzögerung in Systemtaktperiodenschritten in einer Richtung und einem Ausmaß ändert, wie es nötig ist, um seitliche Bewegungen der vertikal verlaufenden Bezugskante (130) zu eliminieren.

10. System nach Anspruch 9, bei welchem die Meßschaltung für die Bewegung der vertikal verlaufenden Bezugskante eine Schaltung (114) aufweist, welche die Horizontalposition der vertikal verlaufenden Bezugskante in aufeinanderfolgenden Halbbildern vergleicht und für jeden Vergleich ein Horizontalkorrektursignal (△P) erzeugt, welches ein Maß für die Anzahl der Systemtaktintervalle der gegebenenfalls vorliegenden Positionsänderung ist.

11. System nach Anspruch 9 oder 10, bei welchem der zweiten Verzögerungseinrichtung (104) das vertikal stabilisierte Videosignal von der ersten Verzögerungseinrichtung (16) zugeführt wird zur Erzeugung eines vertikal und horizontal stabilisierten Videosignals an ihrem Ausgang.

12. System nach einem der Ansprüche 5 bis 11, bei welchem die Schaltung zur Auswahl der Bezugskante aufweist: eine Schaltung (30) zum Beschneiden des Eingangsvideosignals zur Erzeugung von Signalen, die Kontrastsprünge darstellen, welche durch eine im Kamerasichtfeld auftretende Kante verursacht werden; eine einen Fernsehmonitor (38) enthaltende Einrichtung zur Sichtdarstellung des beschnittenen Videosignals; eine Einrichtung (52) zur Erzeugung eines elektronischen Cursors (50), der durch den Kameramann auf dem Monitor auf eine im dargestellten begrenzten Videosignal interessierende Kante (40) einstellbar ist, und eine Schaltung (70), die in Abhängigkeit von der Lage des Cursors auf einer ausgewählten Kante sprunganzeigende Signale zur Ausnutzung bei der Bewegungsmessung der ausgewählten Kante erzeugt.

13. System nach Anspruch 12, bei welchem die Cursor-Erzeugungsschaltung eine erste Schaltung zur Erzeugung eines ersten vertikal gerichteten Cursors (50) zur Auswahl einer interessierenden horizontal verlaufenden Kante und eine Schaltung zur Erzeugung eines zweiten horizontal gerichteten Cursors (132) zur Auswahl einer interessierenden vertikal verlaufenden Bezugskante enthält.

14. System nach Anspruch 13, bei welchem die Bewegungsmeßschaltung für eine horizontal verlaufende Bezugskante aufweist: einen ersten Zähler (80), der so geschaltet ist, daß er mit der Zeilenfrequenz des Eingangsvideosignals getaktet werden kann, daß er mit der Halbbildfrequenz des Eingangsvideosignales zurückgesetzt werden kann und daß er durch ein einen Sprung anzeigendes Signal gestoppt werden kann zur Erzeugung eines Ausgangszählwertes (P), der die Position der die ausgewählte Bezugskante enthaltenden Zeile angibt, und eine Schaltung (84) zum Vergleichen jedes solchen die Vertikalposition anzeigenden Zählwertes (P) mit dem im nächst vorangegangenen entsprechenden Halbbild erzeugten positionsanzeigenden Zählwert und zur Erzeugung eines Vertikalkorrektursignals (△P) für jeden solchen Vergleich.

15. System nach Anspruch 13 oder 14, in welchem die Bewegungsmeßeinrichtung für eine ausgewählte vertikal verlaufende Bezugskante aufweist: einen zweiten Zähler (142) der so geschaltet ist, daß er mit einer dem Reziprokwert des Bildelementintervalls des Eingangsvideosignals entsprechenden Frequenz getaktet werden kann, daß er mit der Zeilenfrequenz des Eingangsvideosignals wiederholtermaßen rücksetzbar ist und daß er bei einem einen Sprung anzeigenden Signal angehalten werden kann zur Erzeugung eines Ausgangszählwertes, welcher die Position der ausgewählten vertikal verlaufenden Bezugskante längs einer durch den horizontal gerichteten Cursor ausgewählten Zeile anzeigt, und eine Schaltung (144) zum Vergleichen jedes solchen die horizontal gerichtete Position anzeigenden Zählwertes mit einem im nächst vorangegangenen Halbbild erzeugten positionsanzeigenden Zählwert und zur Erzeugung eines Horizontalkorrektursignals (△P) für jeden solchen Vergleich.

16. System nach Anspruch 14, bei welchem die Bewegungsmeßeinrichtung für eine ausgewählte horizontal verlaufende Bezugskante weiterhin aufweist: eine Schaltung (56, 55), die in Abhängigkeit von dem Ausgangssignal des ersten Zählers (80) und von dem Vertikalkorrektursignal (△P) ein erstes Nachfolgefenster (3H, 7H oder 15H) erzeugt, welches sich automatisch auf der ausgewählten horizontal verlaufenden Bezugskante festsetzt und dieser folgt, und zur Vorhersage seiner Position im nächsten nachfolgenden entsprechenden Halbbild.

17. System nach Anspruch 15, bei welchem die Bewegungsmeßeinrichtung für eine ausgewählte vertikal verlaufende Bezugskante ferner aufweist: eine Schaltung (120, 119) zur Erzeugung eines sich automatisch auf die ausgewählte vertikal verlaufende Bezugskante (130) festsetzenden und dieser folgenden zweiten Nachfolgefensters (9, 21 oder 45 P.S.) in Abhängigkeit von dem Ausgangszählwert (P) des zweiten Zählers (142) und von dem Horizontalkorrektursignal und zur Vorhersage seiner Position im nächsten folgenden Halbbild.

18. System nach Anspruch 15 oder 17, bei welchem das Eingangsvideosignal ein NTSC-Fernsehsignal ist, in dem die Phase des Farbträgers eine sich über vier Halbbilder erstreckende Sequenz hat (Fig. 7) und bei welchem die Bewegungsmeßeinrichtung für eine ausgewählte vertikal verlaufende Bezugskante eine Schaltung zur Wiederholung der vom horizontal gerichteten Cursor ausgewählten Zeile in einer sich über vier Halbbilder erstreckenden Sequenz enthält, damit der Farbträger an der vertikal verlaufenden Bezugskante in aufeinanderfolgenden Halbbildern dieselbe Phasenlage hat.

19. System nach einem der Ansprüche 12 bis 18, bei welchem das Eingangsvideosignal ein Farbfernsehsignal mit Leuchtdichte- und Farbkomponenten ist und bei welchem die Beschneidungsschaltung eine Schaltung (LPF 28) enthält, welche die Farbkomponente vor dem Beschneiden aus dem Videoeingangssignal praktisch entfernt.

20. System nach einem der Ansprüche 5 bis 11, bei welchem jede Meßeinrichtung aufweist: einen ersten und einen zweiten Generator (55 bzw. 119) zur Erzeugung des ersten bzw. zweiten Nachfolgefensters, welche den horizontal bzw. vertikal verlaufenden Bezugskanten (40, 130) nachfolgen; einen ersten Speicher (57, Fig. 8), welcher dem ersten Generator (55) zugeordnet ist zur Speicherung von Information, die eine Anfangsposition des ersten Nachfolgefensters (50) horizontal längs der horizontal verlaufenden Bezugskante (40) darstellt, und welcher in Abhängigkeit von den Horizontalkorrektursignalen ($\triangle$P, 144) die Horizontalposition des ersten Nachfolgefensters verändert, um seitlichen Bewegungen der horizontal verlaufenden Bezugskante zu folgen; und einen zweiten Speicher (125, Fig. 9), welcher dem zweiten Generator (119) zugeordnet ist zur Speicherung von Information, welche eine anfängliche Position des zweiten Nachfolgefensters vertikal entlang der vertikal verlaufenden Bezugskante darstellt, und welcher in Abhängigkeit von den Vertikalkorrektursignalen ($\triangle$P, 22) die Vertikalposition des zweiten Nachfolgefensters verändert, um Auf- und Abbewegungen der vertikal verlaufenden Bezugskante zu folgen.

21. System nach Anspruch 20, welches ferner eine getrennte, vom Kameramann steuerbare Einrichtung (54A, 118A) enthält zur Initialisierung der die anfänglichen Positionen der horizontal bzw. vertikal verlaufenden Bezugskanten darstellenden Speicherinformation im ersten und zweiten Speicher.

22. System nach Anspruch 20 oder 21, bei welchem der erste und der zweite Speicher Digitalzähler sind, in denen die die Position darstellende Information in Form von Binärzahlen gespeichert ist, deren Größe in Abhängigkeit von den Horizontal- bzw. Vertikalkorrektursignalen erhöht werden kann.

23. System nach Anspruch 20, 21 oder 22, bei welchem die Auswahleinrichtung für die Bezugskante aufweist: eine Schaltung (30) zum Beschneiden des Eingangsvideosignals für die Erzeugung von Signalen, die einen durch eine Kante verursachten Kontrastsprung darstellen; eine einen Fernsehmonitor (38) enthaltende Einrichtung zur Darstellung des beschnittenen Videosignals; eine einen elektronischen Cursor erzeugende Schaltung, die eine durch den Kameramann steuerbare Einrichtung zur Positionierung des Cursors auf dem Monitor auf einer ausgewählten Bezugskante enthält, und wobei das System ferner eine Schaltung (73, 123) enthält, die in Abhängigkeit von der gleichzeitigen Kanteneinstellung der Initialisierungseinrichtung in den Speicher eine Information einspeichert, welche die dann vorliegende Position des Cursors als Anfangsposition eines Nachfolgefensters einspeichert und das Nachfolgefenster auf dem Monitor darstellt.

24. System nach Anspruch 23, bei welchem die letztgenannte Schaltung eine Torschaltung (73, 173) enthält, die mindestens einen ersten und einen zweiten Eingang und einen Ausgang hat, ferner eine Schaltung (70), die in Abhängigkeit von der Einstellung des Cursors auf eine ausgewählte Bezugskante ein Sprunganzeigesignal erzeugt und dieses dem ersten Eingang der Torschaltung zuführt, und bei welcher die Initialisierungseinrichtung einem zweiten Eingang der Torschaltung ein Signal mit einer solchen Charakteristik zuführt, daß bei gleichzeitiger Zuführung mit einem Sprunganzeigesignal ein Signal (LOAD, 59) zur Initialisierung der Speicherung in dem Speicher am Ausgang der Torschaltung erzeugt wird.

## Revendications

1. Système de production d'un signal de correction ($\triangle$P) représentatif d'une instabilité dans un signal vidéo d'entrée produit par une caméra (10), comprenant un dispositif récepteur d'un signal vidéo d'entrée produit par une caméra (10) et présentant une certaine instabilité, un dispositif corrélateur devant comparer les images successives du signal vidéo d'entrée pour identifier un élément d'image correspondant, et un dispositif (80, 84) devant mesurer le mouvement de l'élément d'image correspondant entre les images successives et devant produire un signal de correction ($\triangle$P) représentatif d'un tel mouvement ainsi mesuré;

Caractérisé par le fait que ce système est un système de post-production, par le fait que le dispositif de corrélation comporte des dispositifs (52, 55, 57; 116, 119, 121) devant permettre à un opérateur de sélectionner subjectivement dans le champ visuel de la caméra (38) enregistré par le signal vidéo d'entrée (10) un bord de référence (40, 130) qui soit stationnaire, mise à part l'instabilité, et par le fait que ce bord de référence (40, 130) définit l'élément de l'image qui est utilisé par le dispositif (80, 84) de mesure du mouvement de l'image.

2. Système selon la revendication 1, où le dispositif de sélection sélective par un opérateur comporte un dispositif de sélection distincte dans le signal vidéo d'entrée au moins d'un bord de référence horizontal (40) et d'un bord de référence vertical (130) au sein du champ visuel de la caméra et par rapport auxquels les mouvements respectivement de haut en bas et de côté à côté sont mesurés et où le dispositif de mesure comporte des dispositifs de mesure distincte des mouvements du ou des bord(s) de référence sélectionné(s) afin de produire respectivement des signaux de correction verticale ou horizontale.

3. Système selon la revendication 1 ou 2, où le système comporte de plus: un dispositif de modification du signal vidéo représentant une image au moyen du signal de correction afin d'ajuster la position de l'image globale représentée par le signal de présentation de l'image en réaction à ce signal de correction.

4. Système selon la revendication 1 ou 2, comprenant des dispositifs (22, 16) fonctionnant en réaction à ce signal de correction afin d'appliquer les corrections nécessaires à l'image télévisée globale représentée par le signal vidéo d'entrée afin d'éliminer l'instabilité de l'image.

5. Système selon la revendication 4, annexée à la revendication 2, où le dispositif correcteur fonctionne en réaction à un (ou plusieurs) signal (signaux) de correction sélectionné(s).

6. Système selon la revendication 5, où le dispositif correcteur comporte des dispositifs séparés de correction verticale de l'image télévisée pour éliminer le mouvement vers le haut et vers le bas, ces dispositifs comprenant: un premier dispositif de différé (16, Figure 1) comportant un temps de retard contrôlable raccordé pour recevoir le signal vidéo d'entrée et fonctionnant en réaction au signal de correction verticale afin de varier le temps de retard en incréments linéaires intégraux dans une direction et selon une quantité nécessaires pour éliminer essentiellement le mouvement vers le haut et vers le bas du bord de référence horizontal (40).

7. Système selon la revendication 6, où le signal vidéo d'entrée est un signal entrelacé de champ et où le premier dispositif de différé (16) est une mémoire numérique comportant un temps de retard contrôlable correspondant au moins à un champ d'image télévisée.

8. Système selon la revendication 7, où le dispositif de mesure du mouvement du bord de référence horizontal comporte un dispositif de comparaison de la position verticale du bord de référence horizontal dans des champs d'image successifs correspondants et de production pour chacune de ces comparaisons d'un signal de correction vertical indiquant le nombre éventuel de lignes de l'image télévisée ayant changé de position; et où la mémoire numérique fonctionne en réaction au signal de correction vertical pour en varier le différé dans une direction et selon une quantité égales au nombre intégral de lignes télévisées suffisant pour produire à la sortie de cette mémoire un signal vidéo stabilisé dans la verticale où le bord de référence horizontal est maintenu essentiellement à la même position verticale.

9. Système selon la référence 6, 7, ou 8, où le dispositif de correction comporte des dispositifs de corrections horizontales distinctes de l'image télévisée afin d'éliminer le mouvement latéral, ces dispositifs comprenant: un second dispositif de différé (104, Figure 5) comportant un temps de retard contrôlable et fonctionnant en réaction au signal de correction horizontale afin de varier le temps de retard des incrément de périodicité de l'horloge du système dans une direction et selon une quantité nécessaire pour éliminer essentiel-

lement le mouvement latéral du bord de référence vertical (130).

10. Système selon la revendication 9, où le dispositif de mesure du mouvement du bord de référence vertical comporte un dispositif (144) de comparaison de la position horizontale du bord de référence vertical dans des champs d'image successifs et de production pour chaque comparaison d'un signal de correction horizontal ($\triangle$P) indiquant le nombre éventuel de changements de position des intervalles de l'horloge du système.

11. Système selon la revendication 9 ou 10, où le second dispositif de différé (104) reçoit le signal vidéo stabilisé dans la verticale du premier dispositif de différé (16) pour produire à sa sortie un signal vidéo stabilisé dans la verticale et l'horizontale.

12. Système selon l'une quelconque des revendications 5 à 11, où le dispositif sélectionneur du bord de référence comporte: un dispositif (30) limiteur du signal vidéo d'entrée devant produire des signaux représentant une transition contrastée provoquée par l'apparition d'un bord dans le champ visuel de la caméra; un dispositif comportant un écran de contrôle de télévision (38) de visualisation du signal vidéo limité; un dispositif (52) de production d'un curseur électronique (50) pouvant être positionné (54) sur l'écran par un opérateur afin de provoquer une intersection avec un bord de référence (40) dans l'image vidéo filtrée visualisée; et un dispositif (70) fonctionnant en réaction à cette intersection entre le curseur et un bord sélectionné afin de produire des signaux indicateurs de transitions devant être utilisés pour mesurer le mouvement du bord sélectionné.

13. Système selon la revendication 12, où le dispositif producteur de curseur comporte un dispositif de production d'un premier curseur vertical (50), destiné à sélectionner un bord de référence horizontal, et un dispositif de production d'un second curseur horizontal (132) destiné à sélectionner un bord de référence vertical.

14. Système selon la revendication 13, où le dispositif de mesure du mouvement d'un bord de référence horizontal sélectionné comporte: un premier dispositif compteur (80) raccordé pour être enclenché au taux de lignes du signal vidéo d'entrée, pour être successivement remis à zéro au taux de champ du signal vidéo d'entrée et arrêté par un signal indicateur de transition pour permettre la production d'un compte de sortie (P) indiquant la position de la ligne contenant le bord de référence sélectionné, et un dispositif (84) de comparaison de chacun de ces comptes indicateurs de la position verticale (P) par rapport au compte indicateur de position produit dans le prochain champ correspondant précédent et permettant la production pour chacune de ces comparaisons d'un signal de correction verticale ($\triangle$P).

15. Système selon la revendication 13 ou 14, où le dispositif de mesure du mouvement d'un bord de référence vertical sélectionné comporte: un second compteur (142) raccordé pour être enclenché à un taux correspondant à la réciproque de l'intervalle d'éléments d'image du signal vidéo d'entrée, pour être successivement remis à zéro au taux linéaire du signal vidéo d'entrée, et arrêté par un signal indicateur de transition pour permettre la production d'un compte de sortie indiquant la position du bord de référence vertical sélectionné le long d'une ligne sélectionnée par le curseur positionné à l'horizontale, et un dispositif (144) de comparaison de chacun de ces comptes indicateurs de position sur l'horizontale par rapport au compte indicateur de position produit dans le prochain champ précédent et permettant la production pour chacune de ces comparaisons d'un signal de correction horizontale ($\triangle P$).

16. Système selon la revendication 14, où le dispositif de mesure du mouvement d'un bord de référence horizontal sélectionné comporte en outre: un dispositif (56, 55) fonctionnant en réaction au compte de sortie du premier compteur (80) ainsi qu'au signal de correction verticale ($\triangle P$) pour produire une première fenêtre d'alignement (3H, 7H ou 15H) qui 'accroche' automatiquement et suit le bord de référence horizontal sélectionné et pour en prévoir la position dans le prochain champ correspondant successif.

17. Système selon la revendication 15, où le dispositif de mesure du mouvement d'un bord de référence vertical sélectionné comporte en outre: un dispositif (120, 119) fonctionnant en réaction au compte de sortie (P) du second compteur (142) ainsi qu'au signal de correction horizontale afin de produire une seconde fenêtre d'alignement (9, 21 ou 45 P.S.) qui 'accroche' automatiquement et suit le bord de référence vertical sélectionné (130) et afin d'en prévoir la position dans le prochain champ successif.

18. Système selon la revendication 15 ou 17, où le signal vidéo d'entrée est un signal de télévision NTSC où la phase de la sous-porteuse couleur comporte une séquence à quatre champs (Figure 7) et où le dispositif de mesure du mouvement d'un bord de référence vertical sélectionné comporte un dispositif recycleur de la ligne sélectionnée par le curseur horizontal dans une séquence à quatre champs, de telle sorte que la sous-porteuse couleur au bord de référence vertical présente la même phase dans des champs successifs.

19. Système selon l'une quelconque des revendications 12 à 18, où le signal vidéo d'entrée est un signal de télévision couleur contenant des éléments de luminance et de chrominance, et où le filtre limiteur comporte un dispositif (LPF 28) destiné à éliminer essentiellement l'élément de chrominance du signal vidéo d'entrée avant traitement.

20. Système selon l'une quelconque des revendications 5 à 11, où chaque dispositif de mesure comporte: un premier (55) et un second (119) dispositif générateur des première et seconde fenêtres d'alignement pour suivre respectivement les bords de référence horizontal et vertical (40, 130); une première mémoire (57, Figure 8) dont le fonctionnement est associé au premier générateur (55) pour mémoriser les informations représentant une position initiale de la première fenêtre d'alignement (50) selon une ligne horizontale le long du bord de référence horizontal (40) et modifiant selon les signaux de correction horizontale ($\triangle P$, 144) la position horizontale de la première fenêtre d'alignement pour suivre le mouvement latéral du bord de référence horizontal; et une seconde mémoire (125, Figure 9) dont le fonctionnement est associé au second générateur (119) pour mémoriser les informations représentant une position initiale de la seconde fenêtre d'alignement selon une ligne verticale le long du bord de référence vertical et modifiant selon les signaux de correction verticale ($\triangle P$, 22) la position verticale de la seconde fenêtre d'alignement pour suivre le mouvement descendant et ascendant du bord de référence vertical.

21. Système selon la revendication 20, où le système comporte en outre un dispositif autonome à commande par opérateur (54A, 118A) permettant d'initialiser la mémorisation dans les première et seconde mémoires des informations représentant respectivement les positions initiales des bords de référence horizontal et vertical.

22. Système selon la revendication 20 ou 21, où les première et seconde mémoires sont des compteurs numériques où l'information représentant les positions est mémorisée sous forme de chiffres binaires, adaptables de façon incrémentielle selon respectivement les signaux de correction horizontale et verticale.

23. Système selon la revendication 20, 21 ou 22, où le dispositif de sélection d'un bord de référence comporte un filtre (30) limiteur du signal vidéo d'entrée afin de produire des signaux représentant une transition contrastée provoquée par un bord; un dispositif comportant un écran de contrôle de télévision (38) permettant de visualiser le signal vidéo filtré; un dispositif de production d'un curseur électronique comportant un dispositif pouvant être commandé par un opérateur et destiné à positionner le curseur sur l'écran de contrôle afin de recouper un bord de référence sélectionné; et où le système comporte en outre un dispositif (73, 123) fonctionnant en réaction à l'intersection simultanée des dispositifs d'initialisation, pour permettre la mise en mémoire des informations représentant la position effective du curseur en tant que position initiale d'une fenêtre d'alignement et pour permettre la visualisation de la fenêtre d'alignement sur l'écran de contrôle.

24. Système selon la revendication 23, où le dernier dispositif mentionné comporte un circuit de déclenchement (73, 123) présentant au moins des première et second entrées et une sortie, un dispositif (70) fonctionnant en réaction à l'intersection entre le curseur et un bord de référence sélectionné afin de produire un signal indicateur de transition qui est appliqué à la première entrée du circuit de déclenchement, et où le dispositif d'initialisation fonctionne pour appliquer à une seconde entrée du circuit de déclenchement un signal présentant des caractéristiques telles qu'il y a, lors d'une application simultanée avec un signal indicateur de transition, production d'un signal (LOAD, 59) à la sortie du circuit de déclenchement pour permettre l'initialisation de la mise en mémoire.

Fig. 1

Fig. 3

Fig. 4

Fig. 2

Fig. 6

Fig. 7

Fig. 5

EP 0 079 195 B1

FIG. 8

FIG. 9